(19) [Europäisches Patentamt / European Patent Office / Office européen des brevets]

(11) **EP 2 642 749 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(51) Int Cl.:
***H04N 5/232*** *(2006.01)*

(21) Anmeldenummer: **13160616.2**

(22) Anmeldetag: **22.03.2013**

(54) **Vorrichtung und Verfahren zur Optimierung der Bestimmung von Aufnahmebereichen**

Device and method for optimising the determination of pick-up areas

Dispositif et procédé d'optimisation de la détermination de zones de capture

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2012 DE 102012204697**

(43) Veröffentlichungstag der Anmeldung:
**25.09.2013 Patentblatt 2013/39**

(73) Patentinhaber: **Fraunhofer-Gesellschaft zur Förderung der angewandten Forschung e.V. 80686 München (DE)**

(72) Erfinder:
• **Zerfaß, Thorsten 90408 Nürnberg (DE)**
• **Haßlmeyer, Erik 90443 Nürnberg (DE)**

• **Schlarb, Timo 55566 Kirschroth (DE)**

(74) Vertreter: **Schenk, Markus Schoppe, Zimmermann, Stöckeler Zinkler, Schenk & Partner mbB Patentanwälte Radlkoferstrasse 2 81373 München (DE)**

(56) Entgegenhaltungen:
**WO-A1-2010/114117**

• **LUCE BROTCORNE ET AL: "Fast heuristics for large scale covering-location problems", COMPUTERS & OPERATIONS RESEARCH, Bd. 29, Nr. 6, 1. Mai 2002 (2002-05-01), Seiten 651-665, XP055105637, ISSN: 0305-0548, DOI: 10.1016/S0305-0548(99)00088-X**

**Beschreibung**

Die vorliegende Erfindung betrifft eine Vorrichtung und Verfahren zur Optimierung der Bestimmung von Aufnahmebereichen und insbesondere eine Vorrichtung und ein Verfahren zur Festlegung von einem oder mehreren Aufnahmebereichen aus einem Bildbereich, so dass sie die Gesamtzahl aller Aufnahmebereiche aller Objekte in dem Bildbereich abdecken.

Der selektiven Auswahl von Aufnahmebereichen, die dazu dienen, alle Objekte in einem Bildbereich abzudecken, kommt eine hohe Bedeutung zu. Anwendungsbeispiele finden sich zum Beispiel in der computerassistierten Mikroskopie. Hier werden in einem ersten Schritt Objekte in Aufnahmen mit geringer Vergrößerung lokalisiert und in einem zweiten Schritt erneut angefahren und mit hoher Vergrößerung aufgenommen. Dabei besteht die Problematik, dass der in der höheren Vergrößerung zur Verfügung stehende Bildausschnitt nicht ausreicht, um alle aus dem Detektionsschritt ermittelten Objekte mit einer Aufnahme zu erfassen. Deshalb ist es notwendig, Aufnahmen an mehreren Positionen durchzuführen. Eine Möglichkeit, durch verschiedene Aufnahmen alle Objekte abzudecken, wäre, für jedes Objekt eine separate Aufnahme durchzuführen. Ein solches Verfahren wäre allerdings hochgradig ineffizient, da jede Aufnahme zeitaufwendige Schritte umfasst. So setzt sich ein Aufnahmeschritt aus einer zeitaufwendigen Fokussierung, einem Anfahren der Position, sowie der eigentlichen Bildaufnahme mit Hilfe einer Kamera zusammen. Außerdem müsste man gegebenenfalls auch für jedes der aufgenommenen Bilder Speicherressourcen in Anspruch nehmen, und die große Anzahl an aufgenommenen Bildern würde eine entsprechend große Menge an Speicherressourcen erfordern. Die Anzahl der benötigten Aufnahmebereiche, die alle Objekte eines Bildbereichs abdecken, möglichst gering zu halten, ist daher erstrebenswert.

Nach dem Stand der Technik wurde bereits versucht, möglichst viele Objekte eines Bildbereichs durch eine einzige Aufnahme abzudecken, d.h. es wird versucht, ein oder mehrere Aufnahmebereiche festzulegen, wobei ein Aufnahmebereich jeweils mit einer einzigen Aufnahme einer Kamera in der gewünschten Vergrößerung aufgenommen werden kann. So finden sich im Stand der Technik bereits verschiedene heuristische Verfahren zur Optimierung von Aufnahme- bzw. Abdeckungsbereichen, wie zum Beispiel in den Dokumenten [7], [8], [4], [5] und [2] dargestellt.

Ein vom Stand der Technik nicht gelöstes Problem ist jedoch, wie die Anzahl der Aufnahmebereiche, d.h. im Ergebnis die Anzahl der Aufnahmen mit hoher Vergrößerung durch eine Kamera möglichst gering gehalten werden können, und wie die Bestimmung dieser Aufnahmebereiche möglichst schnell, d.h. möglichst effizient, unter Verwendung möglichst weniger Rechenressourcen durchgeführt werden kann.

Die Aufgabe der vorliegenden Erfindung wird gelöst durch eine Vorrichtung nach Anspruch 1, durch ein Verfahren nach Anspruch 17 und durch ein Computerprogramm nach Anspruch 18.

Eine Vorrichtung zur Festlegung von einem oder mehreren Aufnahmebereichen aus einem Bildbereich wird bereitgestellt. Die Vorrichtung umfasst eine Nachbarschaftsbestimmungseinheit zur Bestimmung, ob zwei Objekte des Bildbereichs benachbart sind. Des Weiteren umfasst die Vorrichtung eine Graphenmengenbestimmungseinheit zur Bestimmung einer Graphenmenge, so dass die Graphenmenge einen oder mehrere vollständige Graphen umfasst, wobei jedes Element des vollständigen Graphen zu jedem anderen Element dieses vollständigen Graphen benachbart ist. Ferner umfasst die Vorrichtung eine Auswahlmengenbestimmungseinheit, die dafür eingerichtet ist, einen vollständigen Graphen der Auswahlmenge hinzuzufügen, wenn eines der Elemente einer Objektmenge von genau diesem einen der vollständigen Graphen der Graphenmenge umfasst ist. Darüber hinaus umfasst die Vorrichtung eine Aufnahmebereichsbestimmungseinheit zur Bestimmung des einen oder der mehreren Aufnahmebereiche basierend auf den vollständigen Graphen der Auswahlmenge.

In einer Ausführungsform wird eine Vorrichtung zur Festlegung von einem oder mehreren Aufnahmebereichen in einem Bildbereich bereitgestellt, wobei der Bildbereich Objekte umfasst, so dass die Aufnahmebereiche alle Objekte des Bildbereichs abdecken.

Eine Objektmenge ist dadurch definiert, dass jedes Element der Objektmenge jeweils eines der Objekte des Bildbereichs repräsentiert, und jedes Objekt des Bildbereichs durch jeweils ein Element der Objektmenge repräsentiert wird. Ein erstes und ein zweites Element der Objektmenge sind benachbart, wenn ein von dem ersten Element der Objektmenge repräsentiertes erstes Objekt der Bildmenge zu einem von dem zweiten Element der Objektmenge repräsentierten zweiten Objekt der Bildmenge benachbart ist.

Die Vorrichtung umfasst eine Nachbarschaftsbestimmungseinheit zur Bestimmung, ob zwei Objekte des Bildbereichs benachbart sind.

Des Weiteren umfasst die Vorrichtung eine Graphenmengenbestimmungseinheit zur Bestimmung einer Graphenmenge, so dass die Graphenmenge einen oder mehrere vollständige Graphen umfasst, wobei jeder der vollständige Graphen wenigstens ein Element der Objektmenge umfasst, wobei jedes der Elemente der Objektmenge von wenigstens einem der vollständigen Graphen der Graphenmenge umfasst ist, wobei jedes Element des vollständigen Graphen zu jedem anderen Element dieses vollständigen Graphen benachbart ist, und wobei kein anderer sonstiger Graph aus den Elementen der Objektmenge gebildet werden kann, der alle Elemente eines der vollständigen Graphen der Graphenmenge und wenigstens ein weiteres Element der Objektmenge enthält, so dass jedes Element des sonstigen Graphen

EP 2 642 749 B1

zu jedem anderen Element des sonstigen Graphen benachbart ist.

Ferner umfasst die Vorrichtung eine Auswahlmengenbestimmungseinheit zur Bestimmung einer Auswahlmenge, wobei die Auswahlmengenbestimmungseinheit dafür eingerichtet ist, für wenigstens eines der Elemente der Objektmenge zu bestimmen, ob das Element von genau einem der vollständigen Graphen der Graphenmenge umfasst ist, und wobei die Auswahlmengenbestimmungseinheit dafür eingerichtet ist, wenn eines der Elemente der Objektmenge von genau einem der vollständigen Graphen der Graphenmenge umfasst ist, diesen vollständigen Graphen der Auswahlmenge hinzuzufügen.

Darüber hinaus umfasst die Vorrichtung ein Aufnahmebereichsbestimmungseinheit zur Bestimmung des einen oder der mehreren Aufnahmebereiche in dem Bildbereich, wobei die Aufnahmebereichsbestimmungseinheit dafür eingerichtet ist, für jeden der vollständigen Graphen der Auswahlmenge jeweils einen der Aufnahmebereiche in dem Bildbereich so zu bestimmen, dass jeder der Aufnahmebereiche alle Objekte des Bildbereichs abdeckt, die von den Elementen eines vollständigen Graphen repräsentiert werden.

Durch die Konzepte der vorliegenden Erfindung kann die Anzahl der Aufnahmen innerhalb eines Analyseprozesses stark reduziert und damit der gesamte Aufnahmevorgang dadurch beschleunigt werden. Die vorgestellten Konzepte unterscheiden sich von dem Stand der Technik unter anderem dadurch, dass zunächst die optimale Aufnahmepositionen mit Hilfe eines direkten Lösungsverfahrens bestimmt werden. Erst wenn nach dessen Anwendung noch Punkte vorhanden sind, die nicht durch einen Aufnahmebereich abgedeckt werden, werden aufwendigere Konzepte bzw. Heuristiken angewandt, um das nun stark reduzierte Problem zu lösen. Dagegen führen die aus dem Stand der Technik bekannten Konzepte keine anfängliche Reduktion des Problems durch, sondern versuchen stattdessen auf Basis des gesamten Problems aufwendige Verfahren oder Heuristiken direkt anzuwenden.

Gemäß einem Ausführungsbeispiel wird eine Graphenmenge, die einen oder mehrere vollständige Graphen der Elemente der Objektmenge umfasst, vorverarbeitet, indem eine Überprüfung auf Eindeutigkeit durchgeführt wird. Kommt ein Element der Objektmenge (wobei die Elemente der Objektmenge jeweils ein Objekt des Bildbereichs repräsentieren) nur in einem einzigen der vollständigen Graphen vor, so wird für die Objekte, die durch die Elemente dieses voll ständigen Graphen repräsentiert werden, ein eigener Aufnahmebereich benötigt. Der so bestimmte vollständige Graph wird einer Auswahlmenge hinzugefügt und kann dann aus der Graphenmenge entfernt werden. Erst nachdem alle vollständigen Graphen, die ein Objekt enthalten, das in nur einem vollständigen Graphen vorkommt, aus der Graphenmenge entfernt wurden, werden komplexere, aufwendigere Ansätze hinsichtlich der in der Graphenmenge verbliebenen vollständigen Graphen angewandt, um die weiteren Aufnahmebereiche zu bestimmen, die benötigt werden, um die noch nicht abgedeckten Objekte des Bildbereichs abzudecken. Hierdurch wird eine signifikante Reduzierung des Problems der Bestimmung der Aufnahmebereiche erreicht, was zu einer deutlichen Reduzierung des benötigten Aufwands an Rechenressourcen führt.

In einer Ausführungsform kann die Auswahlmengenbestimmungseinheit dafür eingerichtet sein, die Auswahlmenge so zu bestimmen, dass alle Elemente der Objektmenge in wenigstens einem der vollständigen Graphen der Auswahlmenge enthalten sind.

Gemäß einer weiteren Ausführungsform kann die Auswahlmengenbestimmungseinheit dafür eingerichtet sein, wenn eines der Elemente der Objektmenge von genau einem der vollständigen Graphen der Graphenmenge umfasst ist, diesen vollständigen Graphen aus der Graphenmenge zu entfernen, und die Elemente dieses vollständigen Graphen aus der Objektmenge zu entfernen. Die Auswahlmengenbestimmungseinheit kann dabei dafür eingerichtet sein, zu bestimmen, ob wenigstens eines der Elemente, die noch in der Objektmenge enthalten sind, von genau einem der vollständigen Graphen umfasst ist, die noch in der Graphenmenge enthalten sind.

Darüber hinaus kann die Auswahlmengenbestimmungseinheit dafür eingerichtet sein, wenn keines der Elemente, die in der Objektmenge enthalten sind, von genau einem der vollständigen Graphen umfasst ist, die in der Graphenmenge enthalten sind, einen Schwellwerttest durchzuführen. Dabei kann die Auswahlmengenbestimmungseinheit dafür eingerichtet sein, entweder einen ersten Auswahlalgorithmus durchzuführen, wenn der Schwellwerttest ergibt, dass eine Anzahl der vollständigen Graphen, die in der Graphenmenge enthalten sind, größer als ein vorgegebener Schwellwert ist, oder aber einen zweiten anderen Auswahlalgorithmus auszuführen, wenn der Schwellwerttest ergibt, dass die Anzahl der vollständigen Graphen, die in der Graphenmenge enthalten sind, kleiner oder gleich dem vorgegebenen Schwellwert ist. Ferner kann die Auswahlmengenbestimmungseinheit dafür eingerichtet sein, bei dem Ausführen des ersten Auswahlalgorithmus oder des zweiten Auswahlalgorithmus wenigstens einen der vollständigen Graphen der Graphenmenge der Auswahlmenge hinzufügen.

In einer weiteren Ausführungsform kann die Auswahlmengenbestimmungseinheit dafür eingerichtet sein, bei dem Ausführen des ersten Auswahlalgorithmus einen der vollständigen Graphen der Graphenmenge auszuwählen, die die größte Anzahl von Elementen aller vollständiger Graphen der Graphenmenge aufweist.

Des Weiteren kann die Auswahlmengenbestimmungseinheit dafür eingerichtet sein, aus den vollständigen Graphen der Graphenmenge denjenigen vollständigen Graphen zu bestimmen und der Auswahlmenge hinzuzufügen, für die die Anzahl, der weiteren vollständigen Graphen, die der Auswahlmenge hinzugefügt werden müssen, damit die Auswahlmenge sämtliche Elemente der Objektmenge umfasst, minimal ist.

In einer anderen Ausführungsform kann jedem der Objekte des Bildbereichs eine Position zugewiesen sein, wobei die Position einen x-Koordinatenwert und einen y-Koordinatenwert umfasst. Dabei kann die Nachbarschaftsbestimmungseinheit dafür eingerichtet sein, festzustellen, ob zwei der Objekte des Bildbereichs benachbart sind, so dass zwei der Objekte des Bildbereichs genau dann benachbart sind, wenn eine erste absolute Differenz der x-Koordinatenwerte der zwei Objekte kleiner oder gleich einem ersten maximalen x-Abstandswert ist, und wenn eine zweite absolute Differenz der y-Koordinatenwerte der zwei Objekte kleiner oder gleich einem zweiten maximalen y-Abstandswert ist.

Gemäß einer Ausführungsform kann die Nachbarschaftsbestimmungseinheit ferner dazu eingerichtet sein, für die Bestimmung der Graphenmenge durch die Graphenmengenbestimmungseinheit eine Nachbarschaftsmenge bereitzustellen, wobei die Nachbarschaftsmenge alle Paare von Elementen der Objektmenge umfasst, so dass jedes der Paare zwei Elemente enthält, die zwei Objekte des Bildbereichs repräsentieren, die benachbart sind.

In einer weiteren Ausführungsform kann die Vorrichtung ferner eine Objektsortiereinheit umfassen, wobei die Objektsortiereinheit dafür eingerichtet sein kann, die Elemente der Objektmenge basierend auf den x-Koordinatenwerten der Objekte des Bildbereichs zu sortieren, die von den Elementen der Objektmenge repräsentiert werden, um eine sortierte Anordnung der Elemente der Objektmenge zu erhalten. Dabei kann die Nachbarschaftsbestimmungseinheit dafür eingerichtet sein, die Nachbarschaftsmenge basierend auf der sortierten Anordnung der Elemente der Objektmenge zu bestimmen.

Die Nachbarschaftsbestimmungseinheit kann gemäß einer Ausführungsform dafür eingerichtet sein, die Nachbarschaftsmenge so zu bestimmen, dass für ein betrachtetes Element aus der sortierten Anordnung der Elemente der Objektmenge, in einer von der sortierten Anordnung vorgegebenen Reihenfolge beginnend mit dem direkten Nachfolger des betrachteten Elements, jeweils einer der Nachfolger des betrachteten Elements daraufhin geprüft wird, ob das betrachtete Element und der jeweiligen Nachfolger benachbart sind, bis die absolute Differenz der x-Koordinatenwerte des von dem betrachteten Element repräsentierten Objekts und des Objekts, das von dem Nachfolger repräsentiert wird, größer ist als der erste maximale x-Abstandswert.

Gemäß einer weiteren Aus führungsform kann die Vorrichtung ferner eine Clustermengenbestimmungseinheit aufweisen, die dafür eingerichtet ist, basierend auf der Nachbarschaftsmenge eine oder mehrere Clustermengen zu bestimmen, so dass jedes der Paare der Nachbarschaftsmenge in genau einer der Clustermengen enthalten ist, wobei kein Paar einer der Clustermengen ein Element enthält, dass zu einem Element eines anderen Paares einer anderen Clustermenge benachbart ist. Dabei kann die Graphenmengenbestimmungseinheit dafür eingerichtet sein, die Graphenmenge basierend auf der einen oder den mehreren Clustermengen zu bestimmen.

Ferner kann nach einer weiteren Ausführungsform die Vorrichtung eine Positionsbestimmungseinheit umfassen, wobei jedes der Objekte der Objektmenge eine Ausdehnung aufweist, und wobei die Positionsbestimmungseinheit dafür eingerichtet sein kann, für jedes Objekt den x-Koordinatenwert zu bestimmen, der dem Objekt zugewiesen ist, und den y-Koordinatenwert des Objekts zu bestimmen der dem Objekt zugewiesen ist, indem ein gewählter x-Koordinatenwert des Objekts und ein gewählter y-Koordinatenwert des Objekts festgelegt wird, wobei der gewählte x-Koordinatenwert und der gewählte y-Koordinatenwert eine Position innerhalb des Objekts oder auf einer Randlinie des Objekts bezeichnet. So kann zum Beispiel der Mittelpunkt oder der Schwerpunkt eines Objekts die Position des Objekts darstellen. In anderen Ausführungsformen kann auch ein anderer Punkt innerhalb des Objektes zur Bestimmung seiner Position herangezogen werden.

In einer weiteren Ausführungsform kann die Positionsbestimmungseinheit dafür eingerichtet sein, den ersten maximalen x-Abstandswert als Differenz einer ersten Ausdehnung eines der Aufnahmebereiche in x-Richtung und einer ersten vordefinierten maximalen Objektausdehnung in x-Richtung zu bestimmen, wobei die Positionsbestimmungseinheit ferner dafür eingerichtet sein kann, den zweiten maximalen y-Abstandswert als Differenz einer Ausdehnung dieses Aufnahmebereichs in y-Richtung und einer zweiten vordefinierten maximalen Objektausdehnung in y-Richtung zu bestimmen.

Gemäß einer weiteren Ausführungsform kann die Aufnahmebereichsbestimmungseinheit dafür eingerichtet sein, für jeden der vollständigen Graphen der Auswahlmenge einen Mittelpunkt für den jeweils einen der Aufnahmebereiche durch Anwendung der Formel:

$$M_x = \left( Max\left(\{x_j | \forall j \in C_i\}\right) + Min\left(\{x_j | \forall j \in C_i\}\right) \right)/2$$

$$M_y = \left( Max\left(\{y_j | \forall j \in C_i\}\right) + Min\left(\{y_j | \forall j \in C_i\}\right) \right)/2$$

zu bestimmen, wobei $C_i$ eine Menge bezeichnet, die den i-ten vollständigen Graphen der Auswahlmenge repräsentiert, wobei j das j-te Element der in dem vollständigen Graphen enthaltenen Elemente bezeichnet, wobei $x_j$ den x-Koordinatenwert des Objekts darstellt, das durch das j-te Element des vollständigen Graphen repräsentiert wird, wobei $y_j$ den y-

Koordinatenwert des Objekts darstellt, das durch das j-te Element des vollständigen Graphen repräsentiert wird, wobei Max ein Maximum bezeichnet und wobei Min ein Minimum bezeichnet.

In einer weiteren Ausführungsform wird eine Vorrichtung zur Einstellung einer Kameraposition bereitgestellt, die eine Vorrichtung zur Festlegung von einem oder mehreren Aufnahmebereichen nach einer der obigen Ausführungsformen, und eine Vorrichtung zum Positionieren umfasst, wobei die Vorrichtung zum Positionieren dafür eingerichtet sein kann, die Aufnahmeposition einer Kamera basierend auf einem Aufnahmebereich der von der Auswahlmengenbestimmungseinheit bestimmten Aufnahmebereiche so einzustellen, dass dieser Aufnahmebereich vollständig von der Kamera aufgenommen werden kann.

Gemäß einer weiteren Ausführungsform wird ein Verfahren zur Festlegung von einem oder mehreren Aufnahmebereichen in einem Bildbereich bereitgestellt, wobei der Bildbereich Objekte umfasst, so dass die Aufnahmebereiche alle Objekte des Bildbereichs abdecken. Das Verfahren umfasst die Schritte:

Bestimmung, ob zwei Objekte eines Bildbereichs benachbart sind,

Bestimmung einer Graphenmenge, so dass die Graphenmenge einen oder mehrere vollständige Graphen umfasst, wobei jeder der vollständigen Graphen wenigstens ein Element einer Objektmenge umfasst, wobei jedes der Elemente der Objektmenge von wenigstens einem der vollständigen Graphen der Graphenmenge umfasst ist, wobei jedes Element des vollständigen Graphen zu jedem anderen Element dieses vollständigen Graphen benachbart ist, und wobei kein anderer sonstiger Graph aus den Elementen der Objektmenge gebildet werden kann, der alle Elemente eines der vollständigen Graphen der Graphenmenge und wenigstens ein weiteres Element der Objektmenge enthält, so dass jedes Element des sonstigen Graphen zu jedem anderen Element des sonstigen Graphen benachbart ist.

Bestimmung einer Auswahlmenge, wobei für wenigstens eines der Elemente der Objektmenge bestimmt wird, ob das Element von genau einem der vollständigen Graphen der Graphenmenge umfasst ist, und wobei, wenn eines der Elemente der Objektmenge von genau einem der vollständigen Graphen der Graphenmenge umfasst ist, dieser vollständige Graph der Auswahlmenge hinzugefügt wird, und

Bestimmung des einen oder der mehreren Aufnahmebereiche in dem Bildbereich, wobei für jeden der vollständigen Graphen der Auswahlmenge jeweils einer der Aufnahmebereiche in dem Bildbereich so bestimmt wird, dass jeder der Aufnahmebereiche alle Objekte des Bildbereichs abdeckt, die von den Elementen seines vollständigen Graphen repräsentiert werden.

Ferner wird ein Computerprogramm bereitgestellt, dass dafür eingerichtet ist, das oben beschriebenen Verfahrens durchzuführen, wenn das Computerprogramm auf einem Computer oder Mikroprozessor abläuft.

Im Folgenden werden bevorzugte Ausführungsformen der Erfindung unter Bezugnahme auf die Zeichnungen beschrieben, wobei

Fig. 1    eine Vorrichtung zur Festlegung von einem oder mehreren Aufnahmebereichen aus einem Bildbereich gemäß einer Ausführungsform darstellt,

Fig.2    eine Vorrichtung zur Festlegung von einem oder mehreren Aufnahmebereichen aus einem Bildbereich gemäß einer anderen Ausführungsform zeigt,

Fig.3    eine Vorrichtung zur Festlegung von einem oder mehreren Aufnahmebereichen aus einem Bildbereich gemäß einer weiteren Ausführungsform zeigt,

Fig. 4    ein Ablaufdiagramm zur Optimierung der Aufnahmebereiche gemäß einer Ausführungsform darstellt,

Fig.5    eine Transformation von Objekten mit Ausdehnung auf zwei punktförmige Objekte ohne Ausdehnung gemäß einer Ausführungsfonn zeigt,

Fig. 6a    punktförmige Objekte in einem zweidimensionalen Koordinatensystem darstellt,

Fig. 6b    einen Nachbarschaftsgraphen zu den punktförmigen Objekten der Fig. 6a gemäß einer Ausführungsform zeigt,

Fig. 7a    einen Nachbarschaftsgraphen gemäß einer Ausführungsform darstellt,

Fig. 7b    einen ersten Teilclustergraph zu dem Nachbarschaftsgraphen der Fig. 7a gemäß einer Ausführungsforin zeigt,

Fig. 7c    einen zweiten Teilclustergraph zu dem Nachbarschaftsgraphen der Fig. 7a gemäß einer Ausführungsform zeigt,

Fig. 8a    den ersten Teilclustergraph darstellt,

Fig. 8b    die vollständigen Graphen zu dem ersten Teilclustergraph der Fig. 8a gemäß einer Ausführungsform durch Umrandungen angibt,

Fig. 9    ein Ablaufdiagramm zur Bestimmung derjenigen vollständigen Graphen, für die ein eigener Aufnahmebereich benötigt wird, gemäß einer Ausführungsform zeigt, wodurch eine Lösung des Set-Cover-Problems erzielt wird,

Fig. 10a    Punktmengen mit markierten Aufnahmebereichen basierend auf einer Heuristik gemäß einer Ausführungsform darstellt,

Fig. 10b    Punktmengen mit markierten Aufnahmebereichen basierend auf Dynamischer Programmierung gemäß einer Ausführungsform darstellt,

Fig. 11a      Graphen mit markierten vollständigen Graphen basierend auf einer Heuristik gemäß einer Ausführungsform zeigt,

Fig. 11b      Graphen mit markierten vollständigen Graphen basierend auf Dynamischer Programmierung gemäß einer Ausführungsform darstellt,

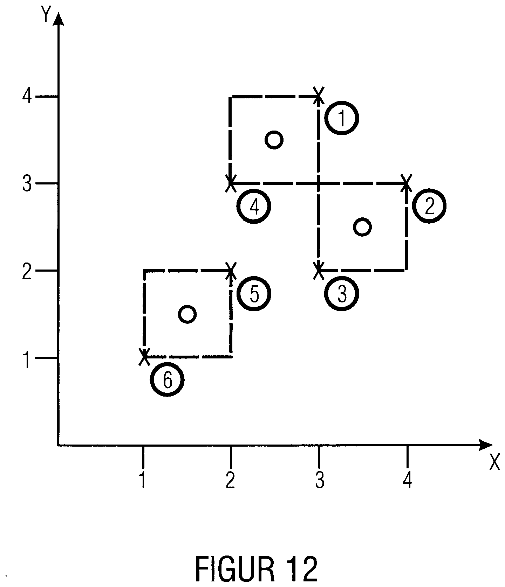

Fig. 12      die ermittelten Mittelpunkte der Aufnahmebereiche zeigt, und

Fig. 13      eine Vorrichtung zur Einstellung einer Kameraposition zeigt.

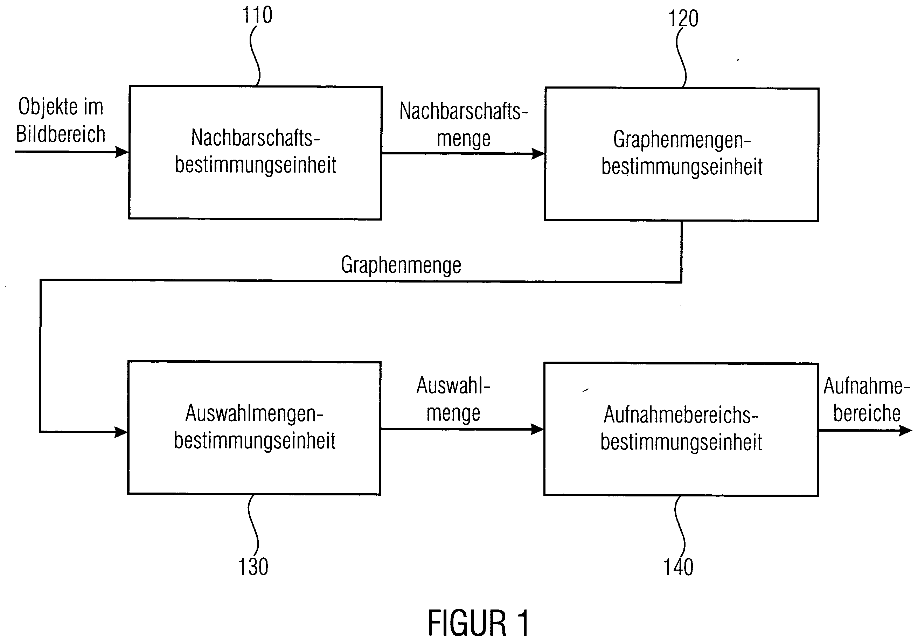

Fig. 1 zeigt eine Vorrichtung zur Festlegung von einem oder mehreren Aufnahmebereichen aus einem Bildbereich gemäß einer Ausführungsform, so dass die Aufnahmebereiche alle Objekte in dem Bildbereich abdecken. Die Vorrichtung umfasst eine Nachbarschaftsmengenbestimmungseinheit 110, eine Graphenmengenbestimmungseinheit 120, eine Auswahlmengenbestimmungseinheit 130 und eine Aufnahmebereichsbestimmungseinheit 140.

Die Nachbarschaftsbestimmungseinheit 110 ist dafür eingerichtet, zu bestimmen, ob zwei der Elemente der Objektmenge benachbart sind, wobei die Elemente der Objektmenge die Objekte des Bildbereichs repräsentieren. Hierfür kann die Nachbarschaftsbestimmungseinheit 110 ein Nachbarschaftskriterium heranziehen. Dieses Nachbarschaftskriterium kann zum Beispiel unter Berücksichtigung der Größe eines Aufnahmebereichs (Aufnahmefensters) gewählt werden, wie zum Beispiel unter Berücksichtigung der Ausdehnung des Aufnahmefensters in x-Richtung und der Ausdehnung des Aufnahmebereichs in y-Richtung. Die Ausdehnung des Aufnahmebereichs in x-Richtung kann, vermindert um eine maximale Ausdehnung der Objekte in x-Richtung, einen ersten maximalen x-Abstandswert definieren. Die Ausdehnung des Aufnahmebereichs in y-Richtung kann, vermindert um eine maximale Ausdehnung der Objekte in y-Richtung, einen zweiten maximalen y-Abstandswert definieren. Dabei beschreibt das Aufnahmebereich beispielsweise den Bereich, der von einer Kamera mit einer gewünschten Vergrößerung aufgenommen werden kann.

Die Nachbarschaftsbestimmungseinheit 110 kann ferner dafür eingerichtet sein, eine Nachbarschaftsmenge zu bestimmen, die alle Paare von Elementen der Objektmenge umfasst, die benachbart sind. Zwei Elemente der Objektmenge sind dabei benachbart, wenn die durch sie repräsentierten Objekte des Bildbereichs benachbart sind.

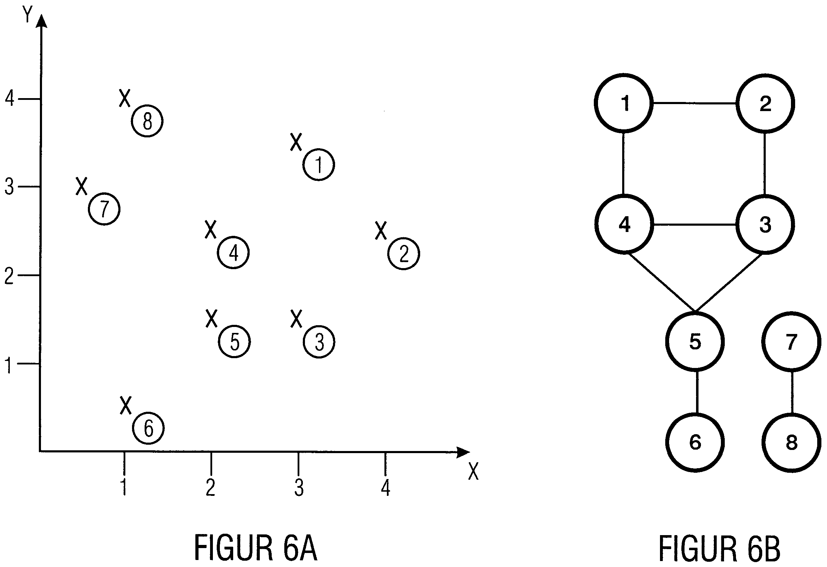

Um dies zu verdeutlichen, wird Bezug auf die Fig. 6a und Fig. 6b genommen. In Fig. 6a sind die Positionen von acht Objekten in einem zweidimensionalen x-y-Koordinatensystem dargestellt, das deren Position in einem zweidimensionalen Bildbereich dargestellt. Die Objektmenge, deren Elemente die Objekte des Bildbereichs repräsentieren, kann dann zum Beispiel aus den Zahlen 1 bis 8 bestehen (Objektmenge = {1; 2; 3; 4; 5; 6; 7; 8}).

Betrachtet man das Objekt Nr. 7 (also das mit 7 bezeichnete Objekt, das sich an der Position (0,5; 3) im Koordinatensystem befindet), so sieht man, dass sich das Objekt 8 nahe bei dem Objekt 7 befindet. Wenn zum Beispiel ein Aufnahmebereich (z.B. ein Aufnahmefenster) so positioniert werden kann, dass er sowohl den Punkt 7 als auch den Punkt 8 umfasst, was im vorliegenden Fall unterstellt wird, so sind beide Punkte benachbart. Die Aufnahmebestimmungseinheit 110 stellt dies in einem solchen Fall fest und fügt das Paar (7; 8) der Nachbarschaftsmenge hinzu.

Beispielsweise kann in dem von Fig. 6a dargestellten Beispiel ein 1 x 1 großes Fenster zur Bestimmung herangezogen werden, um zu ermitteln, ob zwei Punkte benachbart sind. Bei einem solchen Beispiel sind dann das Objekt 7 und 8 an den Positionen (0,5; 3) und (1; 4) benachbart, denn die absoluten Differenzwerte ihrer Koordinatenwerte betragen (0,5; 1), und damit können die Positionen (0,5; 3) und (1; 4) (gerade noch) von einem 1 x 1 großen Fenster abgedeckt werden. Nicht benachbart sind jedoch die Objekte 7 und 6 an den Positionen (0,5; 3) und (1; 0,5), denn die absoluten Differenzwerte ihrer Koordinatenwerte betragen (0,5; 2,5), und damit können die Positionen (0,5; 3) und (1; 0,5) nicht von einem 1 x 1 großen Fenster abgedeckt werden.

In anderen Beispielen kann das Fenster zur Bestimmung, ob Nachbarschaft vorliegt, andere Größen haben. So kann zum Beispiel ein 2 x 2 großes Fenster; ein 5 x 1 großes Fenster, ein 2x3 großes Fenster oder ein Fenster mit beliebigen anderen Abmessungen gewählt werden.

In weiteren Beispielen kann das Fenster, das bestimmt, ob eine Nachbarschaftsbeziehung vorliegt, eine nichtrechteckige Form haben. So kann die Form des Fensters, das bestimmt, ob eine Nachbarschaftsbeziehung vorliegt, z.B. kreisförmig sein. Bei anderen Ausführungsbeispielen kann das Fenster eine beliebige andere Form haben.

Weiterhin kann es zum Beispiel sein, dass die Nachbarschaftsbestimmungseinheit 110 feststellt, dass die Objekte 7 und 6 nicht von einem einzelnen Aufnahmebereich abgedeckt werden können. In diesem Fall stellt die Nachbarschaftsbestimmungseinheit fest, dass zwischen den Objekten 7 und 6 keine Nachbarschaftsbeziehung besteht und führt das Paar (6; 7) nicht der Nachbarschaftsmenge hinzu.

Fig. 6b zeigt einen Nachbarschaftsgraphen zu den punktförmigen Objekten der Fig. 6a, der sämtliche Nachbarschaftsbeziehungen zwischen den Elementen der Objektmenge darstellt. Alle Objekte, die zueinander in Nachbarschaftsbeziehung stehen, sind durch eine Kante verbunden. Eine dazugehörige Nachbarschaftsmenge N würde zum Beispiel wie folgt aussehen:

$$N = \{ (1; 2); (1; 4); (2; 3); (3; 4); (3; 5); (4; 5); (5; 6); (7; 8) \}.$$

Die Nachbarschaftsbestimmungseinheit 110 kann dafür eingerichtet sein, wie in Fig. 1 dargestellt, die Nachbarschaftsmenge der Graphenmengenbestimmungseinheit 120 zu übergeben.

Die Graphenmengenbestimmungseinheit 120 der Fig. 1 ist dafür eingerichtet, eine Graphenmenge zu bestimmen, so dass die Graphenmenge eine oder mehrere vollständige Graphen umfasst, wobei jeder der vollständigen Graphen wenigstens ein Element der Objektmenge umfasst.

Jedes der Elemente der Objektmenge ist dabei von wenigstens einem der vollständigen Graphen umfasst, d.h. jedes Objekt des Bildbereichs wird durch wenigstens ein Element in wenigstens einem der vollständigen Graphen der Graphenmenge repräsentiert.

Ferner ist in jedem vollständigen Graphen jedes Element zu jedem anderen Element dieses vollständigen Graphen benachbart. Das bedeutet, dass in einem vollständigen Graphen nur solche Elemente enthalten sind, die Objekte des Bildbereichs repräsentieren, die alle zueinander benachbart sind.

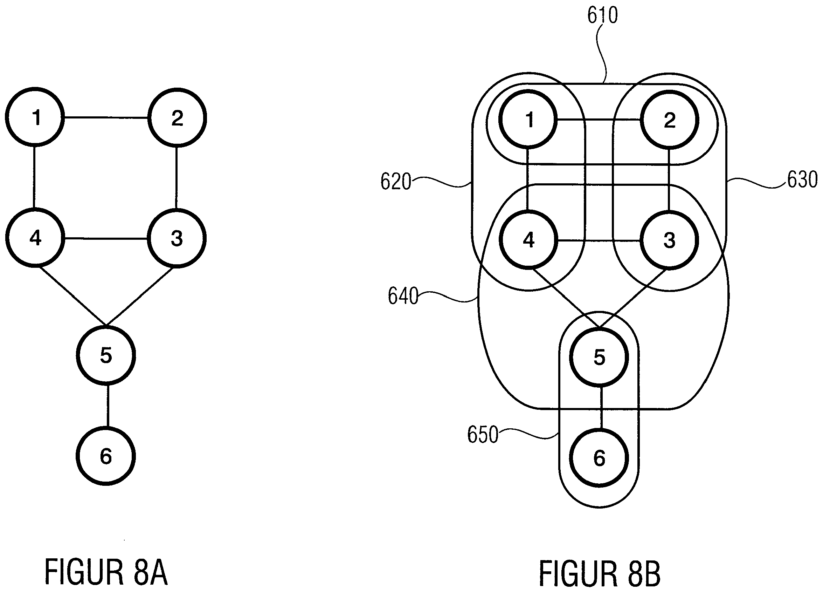

Zur Verdeutlichung wird auf die Fig. 8a und Fig. 8b verwiesen. Fig. 8a stellt die Nachbarschaftsbeziehungen zwischen den Elementen 1, 2, 3, 4, 5 und 6 dar. Fig. 8b gibt zu diesen Elementen die vollständigen Graphen durch die Umrandungen 610, 620, 630, 640 und 650 an.

So ist zum Beispiel in Fig. 8b gezeigt, dass Objekt 3 sowohl zu Objekt 4 als auch zu Objekt 5 benachbart ist, sowie, dass auch Objekt 4 zu Objekt 5 benachbart ist. Somit bilden die Objekte 3, 4 und 5 einen vollständigen Graphen, angedeutet durch die Umrandung 640.

Betrachtet man in Fig. 8b das Objekt 6, so stellt man fest, dass das Objekt 6 zum Objekt 5 benachbart ist, aber zu keinem weiteren Objekt. Folglich bilden die Objekte 5 und 6 einen weiteren vollständigen Graphen, angedeutet durch die Umrandung 650.

Die Menge der vollständigen Graphen G zu der Fig. 8b kann man dabei mengenmäßig wie folgt ausdrücken:

$$G = \{ \{1; 2\}, \{1; 4\}, \{2; 3\}, \{3; 4; 5\}, \{5; 6\} \}$$

Jedes Element der Menge G, die hier wiederum als Menge ausgedrückt ist, repräsentiert dabei einen vollständigen Graphen, z.B. den vollständigen Graphen bestehend aus den Elementen 3, 4, 5.

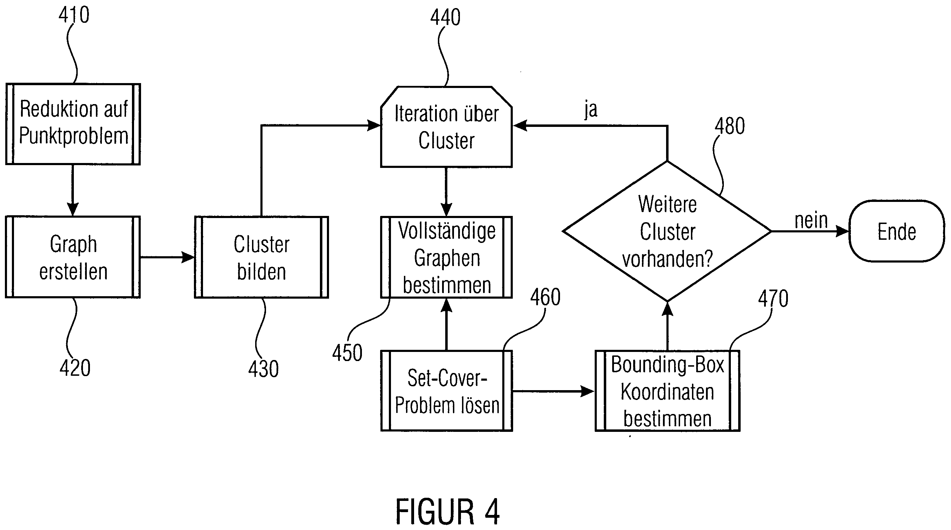

Es ist zu beachten, dass für einen vollständigen Graphen die weitere Bedingung gilt, dass kein anderer vollständiger Graph gebildet werden kann, der alle Elemente des vollständigen Graphen und wenigstens ein weiteres Element der Objektmenge enthält, so dass jedes Element dieses weiteren vollständigen Graphen zueinander benachbart ist. Beispielsweise bilden in Fig. 4c die Elemente 3, 4 und 5 einen vollständigen Graphen. Die Elemente 3 und 4 alleine bilden dagegen keinen vollständigen Graphen, denn sie sind beide bereits im vollständigen Graphen {3; 4; 5} enthalten. Diese Bedingung wird dadurch zum Ausdruck gebracht, dass hinsichtlich der Graphenmenge, die von der Graphenmengenbestimmungseinheit 120 gebildet wird, kein anderer sonstiger Graph aus den Elementen der Objektmenge gebildet werden kann, der alle Elemente eines der vollständigen Graphen der Graphenmenge und wenigstens ein weiteres Element der Objektmenge enthält, so dass jedes Element des sonstigen Graphen zu jedem anderen Element des sonstigen Graphen benachbart ist.

Wenn ein Objekt des Bildbereichs zu keinem anderen Objekt des Bildbereichs benachbart ist, so kann dieses Objekt durch einen vollständigen Graphen der Graphenmenge repräsentiert sein, die als ein einziges Element dieses Objekt enthält.

Die Vorrichtung gemäß der in Fig. 1 gezeigten Ausführungsform umfasst des Weiteren die Auswahlmengenbestimmungseinheit 130. Die Auswahlmengenbestimmungseinheit 130 ist dafür eingerichtet, für wenigstens eines der Elemente der Objektmenge zu bestimmen, ob das Element von genau einer der vollständigen Graphen der Graphenmenge umfasst ist. Das heißt, die Auswahlmengenbestimmungseinheit 130 bestimmt, ob es Elemente gibt, die in nur einem einzigen der vollständigen Graphen enthalten sind. Ist dies der Fall, so lehrt die vorliegenden Erfindung, dass einer der zu bestimmenden Aufnahmebereiche alle Objekte des Bildbereichs umfassen soll, die durch die Elemente dieses vollständigen Graphen repräsentiert werden.

Die Auswahlmengenbestimmungseinheit 130 ist ferner dafür eingerichtet, wenn das Objekt von genau einem der vollständigen Graphen der Graphenmenge umfasst ist, diesen vollständigen Graphen der Auswahlmenge hinzuzufügen. Die Auswahlmenge repräsentiert dabei eine Menge von vollständigen Graphen, die jeweils durch einen einzelnen Aufnahmebereich abgedeckt werden sollen.

Somit kann die Auswahlmengenbestimmungseinheit 130 dafür eingerichtet sein, zunächst alle vollständigen Graphen zu bestimmen, die Elemente enthalten, die nur in einem einzigen der vollständigen Graphen, nämlich diesem Graphen, enthalten sind.

Diese so bestimmten vollständigen Graphen können der Auswahlmenge hinzugefügt werden und aus der Graphenmenge entfernt werden. Das Gesamtproblem der Bestimmung der Aufnahmebereiche reduziert sich damit darauf, die weiteren Aufnahmebereiche basierend auf den in der Graphenmenge verbliebenen vollständigen Graphen zu bestimmen, wobei nur noch diejenigen Objekte von Aufnahmebereichen abgedeckt werden müssen, deren repräsentierenden Elemente nicht bereits in vollständigen Graphen enthalten sind, die der Auswahlmenge hinzugefügt wurden. Somit reduziert sich die Komplexität des Problems der Bestimmung der Auswahlbereiche durch das hier vorgeschlagene Konzept erheblich.

Ferner umfasst die Vorrichtung der Fig. 1 die Aufnahmebereichsbestimmungseinheit 140 zur Bestimmung des einen oder der mehreren Aufnahmebereiche in dem Bildbereich. Die Aufnahmebereichsbestimmungseinheit 140 ist dafür eingerichtet, für jeden der vollständigen Graphen der Auswahlmenge jeweils einen der Aufnahmebereiche in dem Bildbereich so zu bestimmen, dass dieser Aufnahmebereich alle Objekte umfasst, die von Elementen des betrachteten vollständigen Graphen repräsentiert werden. Für jeden der vollständigen Graphen der Auswahlmenge ist somit ein eigener Aufnahmebereich vorgesehen.

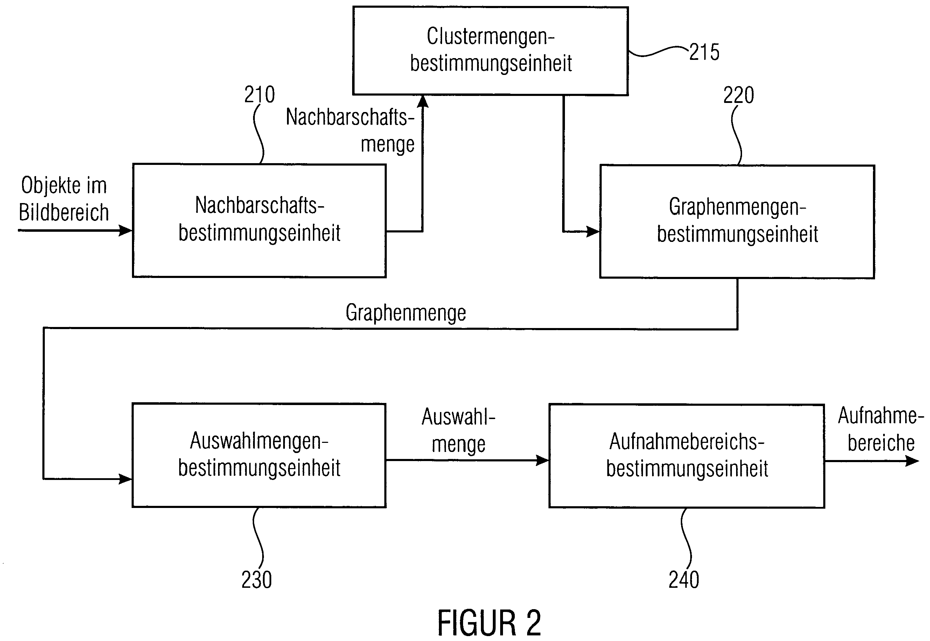

Fig. 2 zeigt eine Vorrichtung zur Festlegung von einem von mehreren Aufnahmebereichen aus einem Bildbereich gemäß einer weiteren Ausführungsform. Die Vorrichtung umfasst eine Nachbarschaftsbestimmungseinheit 210, eine Graphenmengenbestimmungseinheit 220, eine Auswahlmengenbestimmungseinheit 230 und eine Aufnahmebereichsbestimmungseinheit 240. Ferner umfasst die Vorrichtung eine Clustermengenbestimmungseinheit 215.

Die Nachbarschaftsbestimmungseinheit 210 bestimmt eine Nachbarschaftsmenge, wie bereits für die Nachbarschaftsbestimmungseinheit 110 der Fig. 1 beschrieben, und übergibt diese Nachbarschaftsmenge der Clustermengenbestimmungseinheit 215.

Die Clustermengenbestimmungseinheit ist dafür eingerichtet, basierend auf der Nachbarschaftsmenge eine oder mehrere Clustermengen zu bestimmen, so dass jedes der Paare von der Nachbarschaftsmenge in genau einer der Clustermengen enthalten ist, wobei kein Paar einer der Clustermengen ein Element enthält, dass zu einem anderen Element eines anderen Paares einer anderen Clustermenge benachbart ist.

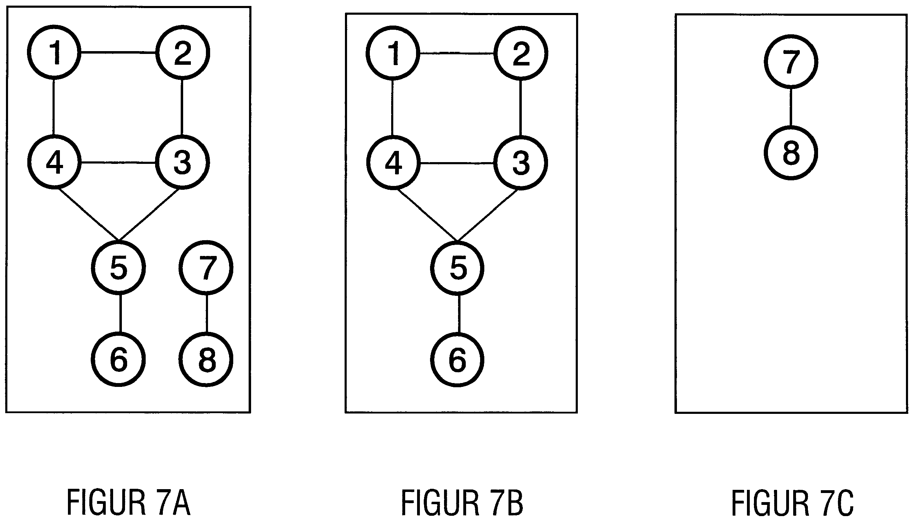

In den Darstellungen der Fig. 7a, Fig. 7b und Fig. 7c umfasst also jede der Clustermengen alle Elemente, die unmittelbar durch eine Kante verbunden sind, und zudem alle Elemente die mittelbar durch Kanten verbunden sind, wobei sich bei dieser mittelbaren Verbindung weitere Elemente zwischen den verbundenen Elementen befinden können. So sind z.B. in Fig. 7a, die Elemente 2 und 6. mittelbar durch Kanten verbunden, obwohl z.B. die Elemente 3 und 5 zwischen ihrer mittelbaren Kantenverbindung liegen. Die Elemente 2 und 6 gehören somit demselben Cluster an.

Fig. 7b zeigt für den Nachbarschaftsgraph der Fig. 7a einen ersten Teilclustergraph mit den Elementen 1, 2, 3, 4, 5 und 6. Die Elemente 1, 2, 3, 4, 5 und 6 sind nur in Paaren der Nachbarschaftsmenge enthalten, die in der ersten Clustermenge enthalten sind. Fig. 7c zeigt für den Nachbarschaftsgraph der Fig. 7a einen zweiten Teilclustergraph mit den Elementen 7 und 8.

Diese Clustermengenbildung ist deswegen besonders vorteilhaft, weil die nachfolgenden Auswahlschritte separat für jede der bestimmten Clustermengen durchgeführt werden können. Eine separate Durchführung der nachfolgenden Auswahlschritte ist insbesondere deshalb möglich, da ein Auswahlbereich in keinem Fall so gewählt werden kann, dass er gleichzeitig ein erstes und ein zweites Objekt des Bildbereichs abdeckt, wenn die beiden Objekte durch Elemente repräsentiert werden, die unterschiedlichen Paaren unterschiedlicher Clustermengen angehören.

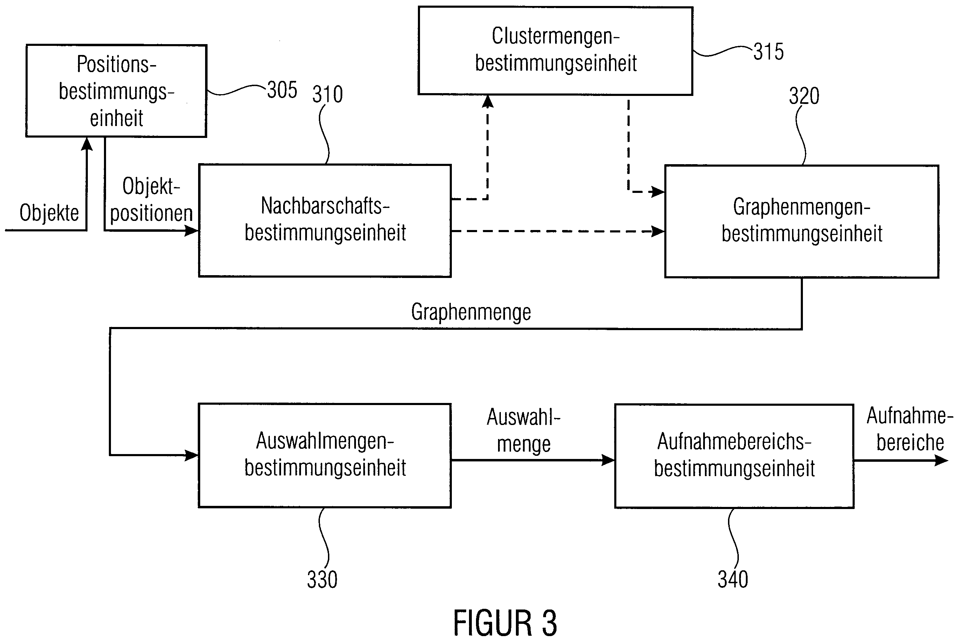

Fig. 3 zeigt eine Vorrichtung zur Festlegung von einem oder mehreren Aufnahmebereichen aus einem Bildbereich gemäß einer weiteren Ausführungsform. Die Vorrichtung kann optional eine Clustermengenbestimmungseinheit 315 enthalten, wie sie bereits mit der Clustermengenbestimmungseinheit 215 für die Fig. 2 beschrieben wurde. Ferner umfasst die Vorrichtung eine Nachbarschaftsbestimmungseinheit 310, eine Graphenmengenbestimmungseinheit 320, eine Auswahlmengenbestimmungseinheit 330 und eine Aufnahmebereichsbestimmungseinheit 340, die der Nachbarschaftsbestimmungseinheit 110, der Graphenmengenbestimmungseinheit 120, der Auswahlmengenbestimmungseinheit 130 und der Aufnahmebereichsbestimmungseinheit 140 der Fig. 1 entsprechen.

Des Weiteren umfasst die Vorrichtung nach Fig. 3 eine Positionsbestimmungseinheit 305. Die Positionsbestimmungseinheit 305 ist dafür eingerichtet für jedes Objekt des Bildbereichs, einen x-Koordinatenwert und einen y-Koordinatenwert zu bestimmen. Dabei wird in der Ausführungsform der Fig. 3 davon ausgegangen, dass jedes Objekt eine Ausdehnung hat. Die Positionsbestimmungseinheit ist dafür eingerichtet, diese Objekte mit Ausdehnung auf einen einzelnen Punkt im zweidimensionalen Raum zu reduzieren. Hierdurch werden die nachfolgenden Berechnungen vereinfacht, die benötigte Rechenzeit zum Auffinden der Aufnahmebereiche weiter reduziert und so die Effizienz des Auffindens der Aufnahmebereiche weiter erhöht.

Die Ausführungsform der Fig. 3 kann dabei berücksichtigen, dass eine Reduzierung von Objekten mit einer Ausdehnung auf einen Punkt es auch erforderlich macht, einen maximalen x-Abstandswert, und einen maximalen y-Abstandswert, die definieren, wann zwei Objekte als benachbart gelten, anzupassen. Dies kann derart erfolgen, dass eine maximale Ausdehnung der Objekte in x-Richtung und eine maximale Ausdehnung der Objekte in y-Richtung berücksichtigt wird.

So kann ein erster maximalen x-Abstandswert als Differenz einer ersten Ausdehnung eines der Aufnahmebereiche in x-Richtung und einer ersten vordefinierten maximalen Objektausdehnung in x-Richtung bestimmt sein. Ein zweiter maximaler y-Abstandswert kann als Differenz einer Ausdehnung dieses Aufnahmebereichs in y-Richtung und einer zweiten vordefinierten maximalen Objektausdehnung in y-Richtung bestimmt sein.

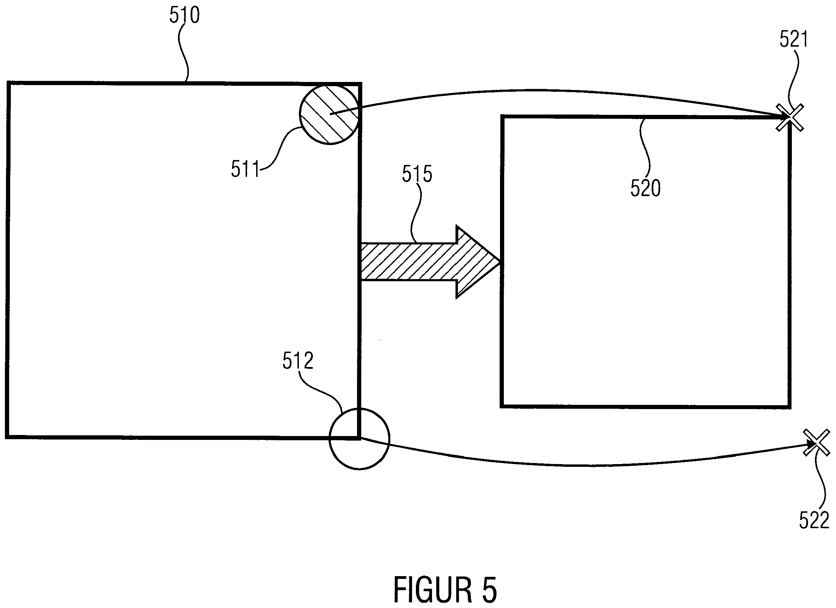

Fig. 5 stellt veranschaulicht dies zeichnerisch, wobei Fig. 6 eine Transformation des Problems der Bestimmung des Aufnahmebereichs auf ein Punktproblem zeigt. Durch die Transformation der Objekte mit Ausdehnung auf Objektpunkte wird eine Anpassung der Größe des Fensters, durch das bestimmt wird, ob zwei Objekte benachbart sind, erforderlich. Das Fenster zur Bestimmung der Nachbarschaft ist entsprechend zu verkleinern, z.B. um eine maximal mögliche Ausdehnung des größten der Objekte.

Gemäß einer weiteren Ausführungsform wird eine Vorrichtung bereitgestellt, die dafür eingerichtet ist, die folgenden Bearbeitungsschritte durchzuführen:

- Reduktion des Aufnahmebereichs um die maximal zu erwartende Objektgröße. Hierdurch wird das Problem, Objekte, die eine Ausdehnung aufweisen, und die von einem Aufnahmebereich abgedeckt werden sollen, darauf reduziert, den Aufnahmebereich für Objekte ohne Ausdehnung (Objektpunkte) zu bestimmen.
- Aufbau eines Nachbarschaftsgraphen auf Basis des vordefinierten Aufnahmebereichs
- Clusterbildung auf Basis des Nachbarschaftsgraphen
- Bestimmung der vollständigen Graphen für jeden Cluster
- Bestimmung der vollständigen Graphen, für die ein eigener Aufnahmebereich zu bestimmen ist im Rahmen der Lösung eines Set-Cover-Problems
- Bestimmung der Aufnahmepositionen anhand der ermittelten vollständigen Graphen, für die ein eigener Aufnahmebereich zu bestimmen ist.

Ebenso wird ein entsprechendes Verfahren bereitgestellt.

Die Ablaufschritte eines solchen Verfahrens sind in Fig. 4 dargestellt. Zunächst erfolgt in Schritt 410 die Reduzierung des Problems auf ein Punktproblem. Dies kann beispielsweise durch die Positionsbestimmungseinheit 305 der Fig. 3 erfolgen. Bei der Reduzierung auf ein Punktproblem werden Objekte mit Ausdehnung auf punktförmige Objekte reduziert, und der maximale Abstand in x- und y-Richtung, bei dem zwei Objekte noch als benachbart gelten, wird entsprechend gewählt, bzw. in Abhängigkeit von einer vordefinierten maximalen Ausdehnung der Objekte in x- bzw. y-Richtung entsprechend angepasst.

In Schritt 420 werden die Nachbarschaftsbeziehungen zwischen allen Elementen einer Objektmenge auf Basis des vordefinierten Aufnahmebereichs bestimmt, wobei die Elemente der Objektmenge jeweils ein Objekt des Bildbereichs repräsentieren. Bildlich kann dies etwa durch Fig. 6b illustriert werden, die die Elemente 1 bis 8 darstellt, wobei in dem Bildbereich benachbarte Objekte durch eine Kante miteinander verbunden sind. Durch Bestimmung der Nachbarschaftsbeziehungen zwischen den Objekten ergibt sich ein Nachbarschaftsgraph.

In Schritt 430 werden Cluster gebildet, wie dies z.B. durch die Fig. 7a, Fig. 7b und Fig. 7c dargestellt ist. Fig. 7a zeigt den Nachbarschaftsgraphen. Fig. 7b zeigt einen ersten Teilclustergraphen, der ein erstes Cluster beschreibt. Fig. 7c zeigt einen zweiten Teilclustergraphen, der ein zweites Teilcluster beschreibt.

In Schritt 440 startet die Iteration über ein erstes der ermittelten Cluster. Zunächst werden dabei in Schritt 450 die vollständigen Graphen des Clusters bestimmt. In Schritt 460 werden dann unter Anwendung der Optimierungskonzepte, wie sie Gegenstand der Ausführungsformen sind, diejenigen vollständigen Graphen bestimmt, die von separaten Aufnahmebereichen abgedeckt werden sollen. Hierdurch wird das Set-Cover-Problem gelöst.

In Schritt 470 werden die Bounding-Box-Koordinaten bestimmt, d.h. die Umrandungen der Aufnahmebereiche. Zum Beispiel werden zu jedem ausgewählten vollständigen Graphen, zu dem ein eigener Aufnahmebereich zu bestimmen ist, die Mittelpunkte des Aufnahmebereichs bestimmt, und darauf basierend die Umrandungslinien des jeweiligen Aufnahmebereichs im x-Koordinatensystem ermittelt.

Danach wird in Schritt 480 geprüft, ob weitere Cluster vorhanden sind. Ist dies der Fall, so erfolgt in Schritt 440 eine Iteration über eines der weiteren verbliebenen Cluster. Ist dies nicht der Fall, so endet der Ablauf.

Im Folgenden wird die Reduktion von Objekten mit Ausdehnung auf ein Objekt ohne Ausdehnung beschrieben, d.h. auf ein Objekt, das aus einem Punkt besteht. Eine solche Reduzierung eines Objekts auf einen Objektpunkt kann beispielsweise von einer Positionsbestimmungseinheit 305 durchgeführt werden. Die Reduzierung der vorliegenden Objekte auf Punkte ohne Ausdehnung vereinfacht die Entscheidung, ob ein Objekt, beispielsweise eine Zelle, wie beispielsweise eine Blutzelle eines Blutausstrichs, vollständig innerhalb eines Aufnahmebereichs liegt.

Um dennoch die Ausdehnung der Objekte zu berücksichtigen, werden für die Bestimmung der Nachbarschäftsbeziehungen zwischen den punktförmigen Objekten ein angepasster Aufnahmebereich verwendet, der um den maximal anzunehmenden Objektdurchmesser verkleinert ist. Hierdurch wird verhindert, dass Objekte am Rand des Aufnahmebereichs nicht vollständig abgebildet werden und somit für eine weitere Analyse unbrauchbar werden.

Fig. 5 stellt diese Transformation des vorliegenden Problems auf ein Punktproblem zeichnerisch dar. Die linke Seite der Fig. 5 zeigt ein erstes Objekt 511 und ein zweites Objekt 512 vor ihrer Transformation. Bevor die Objekte 511 und 512 transformiert werden, haben beide Objekte eine Ausdehnung. Zusätzlich zeigt die linke Seite von Fig. 5 einen ersten Aufnahmebereich 510. Das erste Objekt 511 liegt vor der Transformation vollständig innerhalb des ersten Aufnahmebereichs 510. Das zweite Objekt 512 liegt vor der Transformation nicht vollständig innerhalb des Aufnahmebereichs 510.

Der Pfeil 515 repräsentiert eine Transformation, bei der das erste Objekt 511 und das zweite Objekt 512 zu einem ersten punktförmigen Objekt 521 bzw. zu einem zweiten punktförmigen Objekt 522 transformiert werden. Um die Ausdehnung der Objekte zu berücksichtigen, wird die Größe des ersten Aufnahmebereichs bei der Transformation verändert, insoweit als der erste Aufnahmebereich 510 durch die Transformation auf einen zweiten Aufnahmebereich 520 transformiert wird, wobei zur Bestimmung von Nachbarschaftsbeziehungen ein angepasster Aufnahmebereich 520 verwendet wird, der dem Aufnahmebereich 510 entspricht, der um einen maximal anzunehmenden Objektdurchmesser verkleinert wurde. Hierdurch wird verhindert, dass Objekte am Rand des Aufnahmebereichs durch die später zu bestimmenden Aufnahmebereiche von diesen nicht vollständig abgedeckt werden und somit, z.B. für eine weitere Analyse unbrauchbar werden.

Das transformierte erste Objekt 521 wird auch nach der Transformation durch den reduzierten transformierten Aufnahmebereich 520 erfasst. Das zweite transformierte Objekt 522 wird nach der Transformation korrekterweise nicht durch den reduzierten transformierten Aufnahmebereich 520 erfasst. Die Transformation beeinflusst somit nicht das Ergebnis des Entscheidungsprozesses, lediglich die Entscheidung selbst wird vereinfacht.

Im Folgenden wird erläutert, wie bestimmt werden kann, welches Objekt eines Bildbereichs zu welchem anderen Objekt des Bildbereichs benachbart ist. Mit anderen Worten wird der Aufbau des Nachbarschaftsgraphen erläutert. In einer Ausführungsform ist die Nachbarschaftsbestimmungseinheit dafür eingerichtet, die hier vorgestellten Konzepte zur Bestimmung, ob zwei der Objekte der Objektmenge benachbart sind, einzusetzen.

Bei den Eingabedaten zur Bestimmung, welche der Paare von zwei Objekten des Bildbereichs benachbart sind, handelt es sich um K Punkte im zweidimensionalen Raum. Diese Punktmenge wird im weiteren Verlauf, z.B. durch die Notation P = { $\{x_1, y_1\}$, ..., $\{x_k, y_k\}$} bezeichnet. Wie bereits dargestellt, ist es möglich, dass mehrere Punkte dieser Menge, die die Position eines Objekts repräsentieren, durch einen gemeinsamen Aufnahmebereich abgedeckt werden können. Es ist jedoch nur möglich, zwei oder mehr Punkte mit einer Aufnahmeposition abzudecken, falls der Abstand zwischen diesen Punkten kleiner als die Ausdehnung des Aufnahmebereichs ist.

Um für die weiteren Berechnungsschritte eine effizientere Präsentation dieser Beziehungen zwischen Punkten herzustellen, empfiehlt sich die Transformation der Punkte und ihrer räumlichen Beziehungen in einem Graphen. Der Aufbau des Graphen ergibt sich wie folgt: Die Knoten des Graphen repräsentieren die Punkte $P_i \in P, i \in [1,K]$ im zweidimensionalen Raum. Eine Kante im Graphen ergibt sich, wenn zwei Knoten in einem gemeinsamen Aufnahmebereich abgedeckt werden können. Fig. 6a stellt die auf zweidimensionale Objektpunkte transformierten Objekte dar, nämlich acht Objekte im zweidimensionalen Raum, nummeriert von 1 bis 8, die jeweils auf einen Objektpunkt im zweidimensionalen Koordinatensystem X-Y reduziert wurden. Fig. 6b stellt den aufgebauten Nachbarschaftsgraph dar.

Zur Beschleunigung des Aufbaus des Nachbarschaftsgraphen werden zunächst alle Punkte in zweidimensionalen Koordinaten anhand ihrer x-Koordinate aufsteigend sortiert. Zum Ermitteln der Nachbarschaftsbeziehungen der einzelnen Knoten wird nun über alle Punkte iteriert und für deren Nachbarn die Zugehörigkeit zu einem Aufnahmebereich überprüft. Aufgrund der Sortierung müssen dabei nur Punkte betrachtet werden, deren x-Koordinate größer als die des aktuell betrachteten Punkts ist oder einfach gesagt, es müssen nur die Punkte betrachtet werden, die dem aktuellen Punkt in der Liste folgen. Für Punkte, die sich aufgrund ihrer x-Koordinate innerhalb des Aufnahmebereichs befinden können, muss anschließend überprüft werden, ob sich die y-Koordinate innerhalb des Aufnahmebereichs befindet. Sind beide Bedingungen erfüllt, können beide Punkte durch einen gemeinsamen Aufnahmebereich erfasst werden. So ergibt sich für diesen Punkt eine Nachbarschaftsbeziehung mit dem aktuellen Punkt, die im Graphen durch eine Kante zwischen den beiden Knoten repräsentiert wird.

Im Folgenden wird die Clusterbildung auf Basis des Graphen erläutert. Zur Reduktion des späteren Berechnungsaufwands wird der Nachbarschaftsgraph in seine unabhängigen Teilgraphen zerlegt. Hierbei spricht man von Clusterbildung, wobei jeweils ein unabhängiger Teilgraph ein Cluster repräsentiert. Zwei Teilgraphen sind dann voneinander unabhängig, wenn sie nicht durch eine Kante verbunden sind. Fig. 7a, Fig. 7b und Fig. 7c veranschaulichen diesen Vorgang bildlich. Zur Bestimmung der unabhängigen Teilgraphen, d.h. zur Bestimmung der Cluster, wird eine Äquivalenzliste verwendet. Zur Erstellung wird ausgehend von einem Knoten des Nachbarschaftsgraphen über alle benachbarten Knoten iteriert, und diese als äquivalent zum aktuellen Knoten markiert. Dieser Vorgang wiederholt sich für alle Knoten des Nachbarschaftsgraphen. Die sich so ergebenden Äquivalenzklassen entsprechen den gesuchten Teilgraphen und definieren so die gesuchten Cluster. Fig. 7a illustriert dabei den Nachbarschaftsgraphen. Fig. 7b stellt den ersten Teilclustergraph dar und Fig. 7c stellt den zweiten Teilclustergraph dar, die sich nach der Clusterbildung ergeben haben.

Im Folgenden wird die Bestimmung der vollständigen Graphen erläutert. Ein derartiges Bestimmen der vollständigen Graphen kann beispielsweise von der Graphenmengenbestimmungseinheit 120 der Fig. 1 für die Bestimmung der Graphenmenge durchgeführt werden. Diese Bestimmung kann beispielsweise auf den unabhängigen Teilgraphen des Nachbarschaftsgraphen erfolgen, die jeweils ein Cluster von Punkten beschreiben, von denen nun die vollständigen Graphen extrahiert werden sollen. Wie bereits beschrieben, gilt ein Teilgraph dabei als vollständig, wenn alle Knoten innerhalb des Teilgraphen miteinander verbunden sind, oder, formal definiert, wenn eine Teilmenge $S_i$ aus $S$ keine

Schnittmenge mit einer der restlichen Teilmengen aus S besitzt, also die folgende Bedingung erfüllt:

$$S_i \not\subseteq S_j,\ j \neq i \qquad (1)$$

Dieses Vorgehen wird in Fig. 8a und Fig. 8b an einem Beispiel des bei der Clusterbildung ermittelten ersten Teilgraphen dargestellt. Ausgehend von der Menge U = {1, ..., 6}, die alle Knoten enthält, ergeben sich die vollständigen Teilgraphen S = { {1; 2}; {1; 4}; {2; 3}; {3; 4; 5}; {5; 6} }.

Im Folgenden wird erläutert, wie auf Basis der Menge aller vollständigen Graphen diejenigen vollständigen Graphen ausgewählt werden können, die von einem einzelnen Aufnahmebereich abgedeckt werden sollen. Mit anderen Worten werden Konzepte bereitgestellt, wie eine Auswahlmenge durch eine Auswahlmengenbestimmungseinheit auf Basis der Graphenmenge, die alle vollständigen Graphen der Objekte des Bildbereichs umfasst, bestimmt werden kann. Hieraus ergibt sich eine effiziente, schnelle und ressourcensparende Lösung des Set-Cover-Problems.

Hierbei gilt es, aus einer Menge von Elementen U = {$P_1$, ..., $P_K$} und einer Menge S = {$S_1$, ..., $S_n$} von Teilmengen mit der Eigenschaft $S_i \subseteq U$ eine Menge $C$ von Teilmengen aus S zu bestimmen, so dass die Anzahl der Teilmengen der Menge $C$ minimal ist und alle Elemente aus U in den Teilmengen in $C$ vorhanden sind. Zusammengefasst wird eine Menge $C \subseteq S$ gesucht, so dass gilt:

$$\bigcup_{\forall C_i \in C} C_i = U \qquad (2)$$

und

$$\underset{C \subseteq S}{\arg\min} \left( |C| \right) \qquad (3)$$

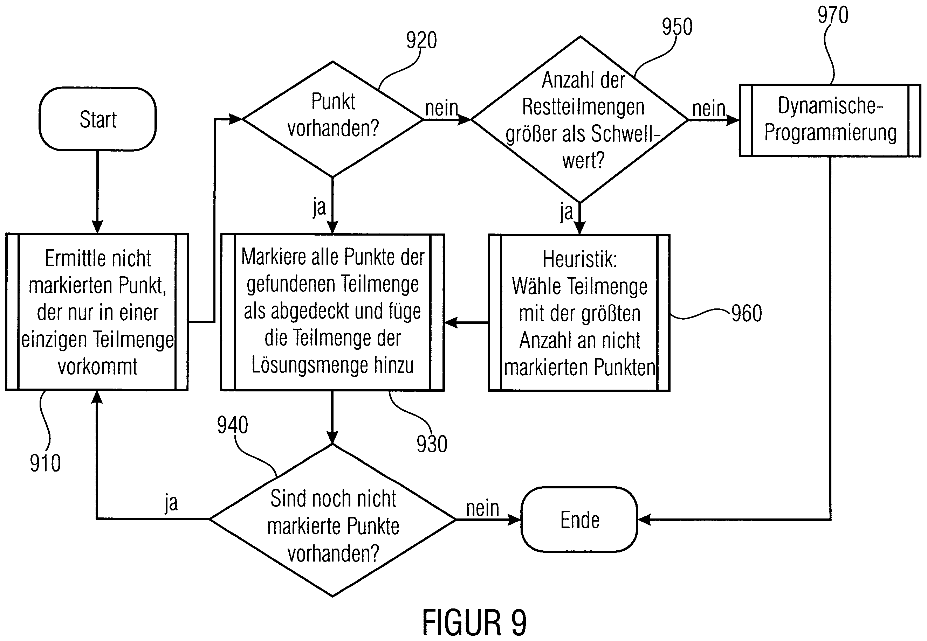

Zur effizienten Lösung dieses Set-Cover-Problems wird der folgende Algorithmus bereitgestellt, der in Fig. 9 dargestellt ist.

Zunächst wird über alle Elemente $P_m \in U$ iteriert und eine Überprüfung auf Eindeutigkeit durchgeführt (Schritte 910, 920, 930 und 940). Ein Element ist eindeutig, wenn es genau in einer Teilmenge $S_i$ vorkommt, also folgendes Kriterium erfüllt ist:

$$A = \{ S_i \cap \{ P_m \} \mid \forall S_i \in S, P_m \in U \}\ mit\ |A| = 1 \qquad (4)$$

Erfüllt das aktuelle Element die in Formel 4 beschriebene Bedingung, wird die das aktuelle Element enthaltende Teilmenge $S_i$ zur Lösungsmenge $C$ hinzugefügt und alle $P_j \in S_i$ als abgedeckt markiert, um diese für die weiteren Überprüfungen auszuschließen (siehe Schritt 930).

Wird die Bedingung hingegen nicht erfüllt, so wird für das nächste nicht markierte Element aus $U$ die Eindeutigkeit bestimmt. Finden sich in $U$ nur noch Elemente, die das Eindeutigkeitskriterium nicht erfüllen und nicht markiert sind, bedarf es eines separaten Bearbeitungsschritts, um die Mehrdeutigkeiten aufzulösen (siehe die Schritte 950, 960 und 970 in Fig. 9). Hierbei sind verschiedene Lösungsansätze möglich.

Um eine optimale Lösung zu erzielen, wird aufgrund der NP-Vollständigkeit des Problems (siehe [6]) bei kleinen Teilmengengrößen ein Ansatz auf Basis der Dynamischen Programmierung gewählt (siehe Schritt 970) (zur Dynamischen Programmierung siehe [1] und [3]). Die Einschränkung auf kleine Teilmengengrößen ergibt sich aus der schlechten Skalierbarkeit (hinsichtlich Laufzeitverhalten und Speicherbedarf) von Ansätzen der Dynamischen Programmierung bei großen Suchräumen.

Für große Teilmengen wurde aus diesem Grund ein heuristischer Ansatz entwickelt (siehe Schritt 960 in Fig. 9). Hierbei wird aus der Menge der restlichen Teilmengen, die die Bedingung aus Formel 4 nicht erfüllen und noch nicht als abgedeckt markiert sind, eine Teilmenge $S_i$ ausgewählt, zu $C$ hinzugefügt, und alle Elemente aus $S_i$ werden als abgedeckt markiert. Hierdurch können sich nun wieder Eindeutigkeiten ergeben, weshalb nun wieder eine Überprüfung des Eindeutigkeitskriteriums folgen muss.

Die Auswahl der Teilmenge $S_i$ kann hierbei auf verschiedene Arten erfolgen. Gemäß einer Ausführungsform kann die Teilmenge $S_i$ ausgewählt werden, die die größte Anzahl an nicht bereits markierten Elementen enthält. In einer weiteren Ausführungsform kann eine Teilmenge $S_i$ zufällig ausgewählt werden.

Die Auswahlmengenbestimmungseinheit 140 der Fig. 1 kann z.B. dafür eingerichtet sein, wenn keines der Elemente, die in der Objektmenge enthalten sind, von genau einer der vollständigen Graphen umfasst ist, die in der Graphenmenge enthalten sind, einen Schwellwerttest durchzuführen (siehe Schritt 950 in Fig. 9). Dabei kann die Auswahlmengenbestimmungseinheit dafür eingerichtet sein, entweder einen ersten Auswahlalgorithmus durchzuführen (Schritt 960), z.B. einen heuristischen Auswahlalgorithmus, wenn der Schwellwerttest ergibt, dass eine Anzahl der vollständigen Graphen, die in der Graphenmenge enthalten sind, größer als ein vorgegebener Schwellwert ist, oder aber einen zweiten anderen Auswahlalgorithmus auszuführen (Schritt 970), z.B. einen Auswahlalgorithmus basierend auf Dynamischer Programmierung, wenn der Schwellwerttest ergibt, dass die Anzahl der vollständigen Graphen, die in der Graphenmenge enthalten sind, kleiner oder gleich dem vorgegebenem Schwellwert ist. Ferner kann die Auswahlmengenbestimmungseinheit dafür eingerichtet sein, bei dem Ausführen des ersten Auswahlalgorithmus oder des zweiten Auswahlalgorithmus wenigstens einer der vollständigen Graphen der Graphenmenge der Auswahlmenge hinzufügen.

Beim Ansatz basierend auf Dynamischer Programmierung werden zur Berechnung der optimalen Lösung alle möglichen Kombinationen zur Abdeckung der vorliegenden Punktmenge betrachtet. Dabei wird in einem ersten Iterationsschritt ein beliebiger vollständiger Graph als Aufnahmeposition ausgewählt, und es wird mit dem gleichen Verfahren ermittelt, wie viele vollständige Graphen benötigt werden, um alle übrigen Punkte abzudecken. In einem zweiten Iterationsschritt wird ein weiterer beliebiger vollständiger Graph, welcher von einer vorherigen Iteration noch nicht ausgewählt wurde, betrachtet, und wiederum die Anzahl der benötigten Aufnahmepositionen zur Abdeckung der übrigen Punkte bestimmt. Dies wird wiederholt, bis alle vollständigen Graphen ausgewählt wurden. Die Iteration, welche die kleinste Anzahl an Aufnahmebereichen bestimmt hat, um alle Punkte abzudecken, wird als optimale Lösung ausgewählt. Somit ergeben sich n · (n-1) · (n-2) ... · 2 Lösungsmöglichkeiten, welche überprüft werden. Die Verwendung eines Ansatzes der Dynamischen Programmierung beschleunigt dabei die Berechnung, indem bereits berechnete Zwischenergebnisse einzelner Iterationsschritte gespeichert werden, und somit nicht mehr neu berechnet werden müssen. Treten bei weiteren Berechnungsschritten Kombinationen von Punkte auf, für die bereits ein optimales Ergebnis ermittelt wurde, so kann dies wiederverwendet werden. Im Verlauf des vorgestellten Ansatzes kann es vorkommen, dass sich durch das Festlegen von bestimmten Aufnahmepositionen für die restlichen Punkte eine eindeutige Lösung ergibt. Dies beschleunigt das Verfahren zusätzlich.

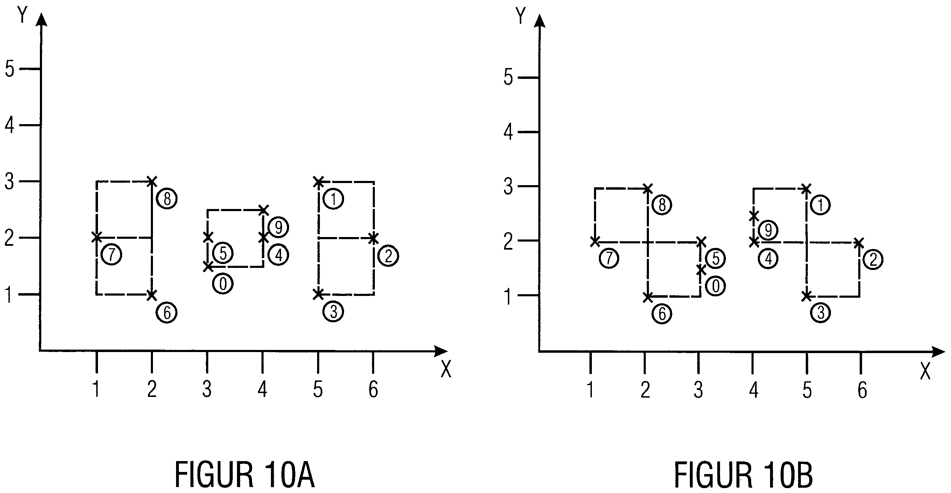

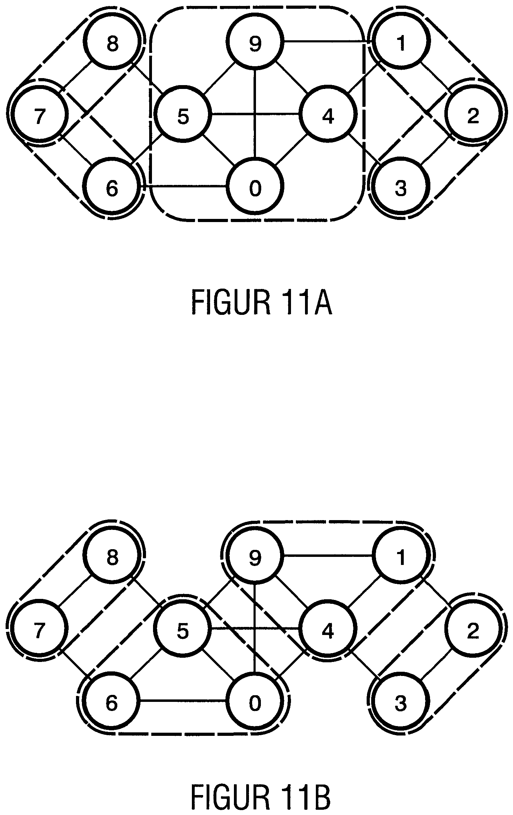

Im Folgenden sollen die beiden Ansätze und ihre Unterschiede anhand eines Beispiels näher erläutert werden. Fig. 10a zeigt dabei eine Punktmenge mit markierten Aufnahmebereichen basierend auf Heuristik. Fig. 10b zeigt eine Punktmenge mit markierten Aufnahmebereichen basierend auf Dynamischer Programmierung. Dabei zeigt Fig. 10b die so ermittelte optimale Lösung für die zu bestimmenden Aufnahmebereiche. In Fig. 10a ist demgegenüber die Lösung basierend auf dem heuristischen Ansatz zu sehen. Im vorliegenden Beispiel ist zu erkennen, dass sich die beiden Ergebnisse in der Anzahl der ermittelten Aufnahmebereiche unterscheiden. Mit Hilfe des Ansatzes der Dynamischen Programmierung wurden vier Aufnahmepositionen zur vollständigen Abdeckung der Punktemenge ermittelt, wohingegen die Anwendung des heuristischen Ansatzes als Ergebnis fünf Aufnahmebereiche bestimmt hat. Da der heuristische Ansatz wie zuvor beschrieben zu Beginn die Teilmenge mit der größten Anzahl an nicht markierten Punkten auswählt, ergibt sich das in Fig. 10a zu sehende nicht optimale Ergebnis. Da bei der Anwendung des Ansatzes der Dynamischen Programmierung jedoch alle möglichen Kombinationen überprüft werden, gelangt dieser Ansatz zur optimalen Lösung mit vier Aufnahmebereichen. In den Fig. 11a und Fig. 11b ist der zuvor beschri ebene Sachverhalt in Graphendarstellung zu sehen, die vollständigen Graphen, die die ermittelten Aufnahmepositionen repräsentieren, sind dabei als Umrandungen jeweils farblich markiert. So stellt Fig. 11a die, durch Umrandungen markierten, vollständigen Graphen basierend auf Heuristik dar. Fig. 11b zeigt, durch Umrandungen markiert, die vollständigen Graphen basierend auf Dynamischer Programmierung.

Im Folgenden wird die Bestimmung der Aufnahmepositionen anhand der, wie oben beschrieben, ausgewählten vollständigen Graphen (Teilmengen) dar. Für jede ermittelte Teilmenge (d.h. für jeden der ausgewählten vollständigen Graphen) kann die Position des Aufnahmebereichs so bestimmt werden, dass alle Elemente dieser Teilmenge abgedeckt sind. Hierzu wird die minimale, sowie die maximale x-/y-Position aller Punkte der finalen Teilmenge $C_i$ ermittelt. Der so ermittelte Aufnahmebereich und dessen Mittelpunkt M, sind in Abbildung zu sehen, sie errechnen sich wie folgt:

$$M_x = (Max(\{x_j | \forall j \in C_i\}) + Min(\{x_j | \forall j \in C_i\}))/2$$
$$M_y = (Max(\{y_j | \forall j \in C_i\}) + Min(\{y_j | \forall j \in C_i\}))/2 \tag{5}$$

Beispielhaft finden sich in der Tabelle unten die Ergebnisse der Evaluierung des vorgestellten Ansatzes auf Basis von zweidimensionalen Punktlisten, die mit Hilfe eines automatisierten Systems zur Erstellung von Differentialblutbildern gewonnen wurden. Es handelt sich insgesamt um die Daten aus 337 analysierten Objektträgern mit einer Gesamtzahl von 79562 Zellen. Durchschnittlich enthielt ein Objektträger ca. 240 Zellen, da es sich bei manchen Objektträgern um Proben handelte, die aufgrund eines bestimmten Krankheitsbildes eine hohe Zelldichte aufwiesen, wurde eine zusätzliche Berechnung der Reduktionsrate durchgeführt. Hierbei wurden Objektträger, bei denen die Anzahl der Aufnahmebereiche auf weniger als 20 reduziert wurden für die Berechnung ausgeschlossen, die Ergebnisse hierzu sind in der zweiten Zeile der Tabelle zu finden.

| Zellzahl | Anzahl der optimierten Aufnahmebereiche | Reduktionsrate |
|---|---|---|
| 79562 | 48703 | 38.79% |
| 77237 | 48624 | 37.05% |

**Tabelle**

Die Tabelle belegt durch die erreichten Reduktionsraten, dass durch den Einsatz der erfindungsgemäßen Konzepte ein erheblicher Zeitgewinn durch die Reduktion der Anzahl der Aufnahmebereiche erzielt werden konnte.

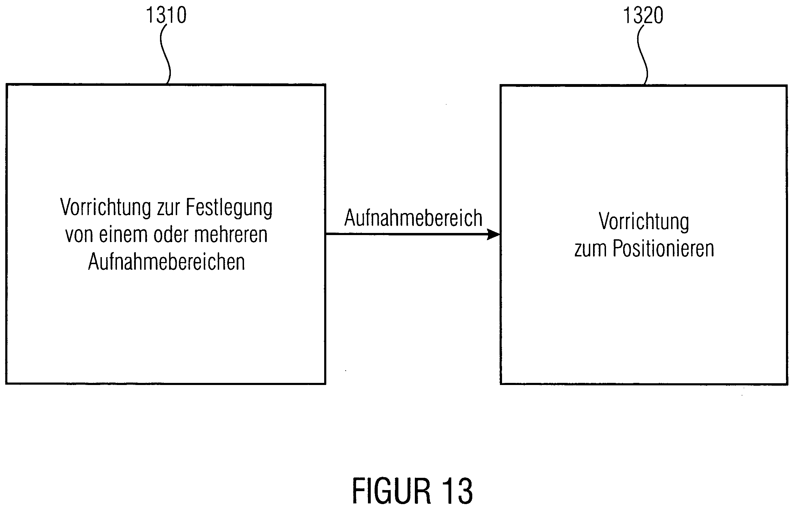

Fig. 13 zeigt Vorrichtung zur Einstellung einer Kameraposition. Die Vorrichtung zur Einstellung einer Kameraposition umfasst eine Vorrichtung zur Festlegung von einem oder mehreren Aufnahmebereichen nach einer der vorherigen Ausführungsformen 1310 und eine Vorrichtung zum Positionieren 1320. Die Vorrichtung zum Positionieren 1320 ist dazu eingerichtet, die Aufnahmeposition einer Kamera basierend auf einem Aufnahmebereich der von der Auswahlmengenbestimmungseinheit der Vorrichtung zur Festlegung 1310 bestimmten Aufnahmebereiche so einzustellen, dass dieser Aufnahmebereich vollständig von der Kamera aufgenommen werden kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Literatur

[1] BELLMAN, R. : Dynamic programming. Princeton University Press, Princeton, NY, 1957.

[2] BROTCORNE, L., G. LAPORTE und F. SEMET: Fast heuristics for large scale covering-location problems. Comput. Oper. Res., 29:651-665, May 2002.

[3] COOK, S. A.: The complexity of theorem-proving procedures. In: Proceedings of the third annual ACM symposium on Theory of computing, STOC '71, S. 151-158, New York, NY, USA, 1971. ACM.

[4] FAN, G., F. LIANG und S. JIN: An Efficient Approach for Point Coverage Problem of Sensor Network. In: Proceedings of the 2008 International Symposium on Electronic Commerce and Security, ISECS '08, S. 124-128, 2008.

[5] HOCHBAUM, D. S. und W. MAASS: Approximation schemes for covering and packingproblems in image processing and VLSI. J. ACM, 32:130-136, 1985.

[6] KARP, R. M.: Reducibility Among Combinatorial Problems. In: MILLER, R. E. und J. W. THATCHER (Hrsg.f Complexity ofComputer Computations, S. 85-103, Plenum Press, 1972.

[7] PORSCHEN, S.: Algorithms for Rectangular Covering Problems. In: ICCSA {1), S. 40-49, 2006.

[8] PORSCHEN, S.: On Problems With Closure Properties. In: IMECS, Bd. 1, S. 258-262, 2011.

## Patentansprüche

1. Vorrichtung zur Festlegung von einem oder mehreren Aufnahmebereichen in einem Bildbereich, wobei der Bildbereich Objekte umfasst, so dass die Aufnahmebereiche alle Objekte des Bildbereichs abdecken, wobei eine Objektmenge dadurch definiert ist, dass jedes Element der Objektmenge jeweils eines der Objekte des Bildbereichs repräsentiert, und jedes Objekt des Bildbereichs durch jeweils ein Element der Objektmenge repräsentiert wird, wobei ein erstes und ein zweites Element der Objektmenge benachbart sind, wenn ein von dem ersten Element der Objektmenge repräsentiertes erstes Objekt des Bildbereichs zu einem von dem zweiten Element der Objektmenge repräsentierten zweiten Objekt des Bildbereichs benachbart ist, und wobei die Vorrichtung umfasst:

eine Nachbarschaftsbestimmungseinheit (110; 210; 310) zur Bestimmung, ob zwei Objekte des Bildbereichs benachbart sind,

eine Graphenmengenbestimmungseinheit (120; 220; 320) zur Bestimmung einer Graphenmenge, so dass die Graphenmenge einen oder mehrere vollständige Graphen umfasst, wobei jeder der vollständigen Graphen wenigstens ein Element der Objektmenge umfasst, wobei jedes der Elemente der Objektmenge von wenigstens einem der vollständigen Graphen der Graphenmenge umfasst ist, wobei jedes Element des vollständigen Graphen zu jedem anderen Element dieses vollständigen Graphen benachbart ist, und wobei kein anderer sonstiger Graph aus den Elementen der Objektmenge gebildet werden kann, der alle Elemente eines der vollständigen Graphen der Graphenmenge und wenigstens ein weiteres Element der Objektmenge enthält, so dass jedes Element des sonstigen Graphen zu jedem anderen Element des sonstigen Graphen benachbart ist,

eine Auswahlmengenbestimmungseinheit (130; 230; 330) zur Bestimmung einer Auswahlmenge, wobei die Auswahlmengenbestimmungseinheit (130; 230; 330) dafür eingerichtet ist, für wenigstens eines der Elemente der Objektmenge zu bestimmen, ob das Element von genau einem der vollständigen Graphen der Graphenmenge umfasst ist, und wobei die Auswahlmengenbestimmungseinheit (130; 230; 330) dafür eingerichtet ist, wenn eines der Elemente der Objektmenge von genau einem der vollständigen Graphen der Graphenmenge umfasst ist, diesen vollständigen Graphen der Auswahlmenge hinzuzufügen, und

eine Aufnahmebereichsbestimmungseinheit (140; 240; 340) zur Bestimmung des einen oder der mehreren Aufnahmebereiche in dem Bildbereich, wobei die Aufnahmebereichsbestimmungseinheit (140; 240; 340) dafür eingerichtet ist, für jeden der vollständigen Graphen der Auswahlmenge jeweils einen der Aufnahmebereiche in dem Bildbereich so zu bestimmen, dass jeder der Aufnahmebereiche alle Objekte des Bildbereichs abdeckt, die von den Elementen eines vollständigen Graphen repräsentiert werden.

2. Vorrichtung nach Anspruch 1, wobei die Auswahlmengenbestimmungseinheit (130; 230; 330) dafür eingerichtet ist, die Auswahlmenge so zu bestimmen, dass alle Elemente der Objektmenge in wenigstens einem der vollständigen Graphen der Auswahlmenge enthalten sind.

3. Vorrichtung nach Anspruch 1 oder 2,
wobei die Auswahlmengenbestimmungseinheit (130; 230; 330) dafür eingerichtet ist, wenn eines der Elemente der Objektmenge von genau einem der vollständigen Graphen der Graphenmenge umfasst ist, diesen vollständigen Graphen aus der Graphenmenge zu entfernen, und die Elemente dieses vollständigen Graphen aus der Objektmenge zu entfernen, und
wobei die Auswahlmengenbestimmungseinheit (130; 230; 330) dafür eingerichtet ist, zu bestimmen, ob wenigstens eines der Elemente, die noch in der Objektmenge enthalten sind, von genau einem der vollständigen Graphen umfasst ist, die noch in der Graphenmenge enthalten sind.

4. Vorrichtung nach einem der vorherigen Ansprüche,
wobei die Auswahlmengenbestimmungseinheit (130; 230; 330) dafür eingerichtet ist, wenn keines der Elemente, die in der Objektmenge enthalten sind, von genau einer der vollständigen Graphen umfasst ist, die in der Graphenmenge enthalten sind, einen Schwellwerttest durchzuführen, und
wobei die Auswahlmengenbestimmungseinheit (130; 230; 330) dafür eingerichtet ist, entweder einen ersten Auswahlalgorithmus durchzuführen, wenn der Schwellwerttest ergibt, dass eine Anzahl der vollständigen Graphen, die in der Graphenmenge enthalten sind, größer als ein vorgegebener Schwellwert ist, oder aber einen zweiten anderen Auswahlalgorithmus auszuführen, wenn der Schwellwerttest ergibt, dass die Anzahl der vollständigen Graphen, die in der Graphenmenge enthalten sind, kleiner oder gleich dem vorgegebenen Schwellwert ist,
wobei die Auswahlmengenbestimmungseinheit (130; 230; 330) dafür eingerichtet ist, bei dem Ausführen des ersten Auswahlalgorithmus oder des zweiten Auswahlalgorithmus wenigstens einen der vollständigen Graphen der Graphenmenge der Auswahlmenge hinzufügen.

5. Vorrichtung nach Anspruch 4, wobei die Auswahlmengenbestimmungseinheit (130; 230; 330) dafür eingerichtet ist, bei dem Ausführen des ersten Auswahlalgorithmus einen der vollständigen Graphen der Graphenmenge auszuwählen, die die größte Anzahl von Elementen aller vollständiger Graphen der Graphenmenge aufweist.

6. Vorrichtung nach Anspruch 4 oder 5, wobei die Auswahlmengenbestimmungseinheit (130; 230; 330) dafür eingerichtet ist, bei der Durchführung des zweiten Auswahlalgorithmus aus den vollständigen Graphen der Graphenmenge denjenigen vollständigen Graphen zu bestimmen und der Auswahlmenge hinzuzufügen, für die die Anzahl, der weiteren vollständigen Graphen, die der Auswahlmenge hinzugefügt werden müssen, damit die Auswahlmenge sämtliche Elemente der Objektmenge umfasst, minimal ist.

7. Vorrichtung nach einem der Ansprüche 4 bis 6, wobei die Auswahlmengenbestimmungseinheit (130; 230; 330) dafür eingerichtet ist, einen Algorithmus als den zweiten Auswahlalgorithmus einzusetzen, der auf Dynamischer Programmierung beruht.

8. Vorrichtung nach einem der vorherigen Ansprüche,
wobei jedem der Objekte des Bildbereichs eine Position zugewiesen ist, wobei die Position einen x-Koordinatenwert und einen y-Koordinatenwert umfasst, und
wobei die Nachbarschaftsbestimmungseinheit (110; 210; 310) dafür eingerichtet ist, festzustellen, ob zwei der Objekte des Bildbereichs benachbart sind, so dass zwei der Objekte des Bildbereichs genau dann benachbart sind, wenn eine erste absolute Differenz der x-Koordinatenwerte der zwei Objekte kleiner oder gleich einem ersten maximalen x-Abstandswert ist, und wenn eine zweite absolute Differenz der y-Koordinatenwerte der zwei Objekte kleiner oder gleich einem zweiten maximalen y-Abstandswert ist.

9. Vorrichtung nach Anspruch 8, wobei die Nachbarschaftsbestimmungseinheit (110; 210; 310) ferner dazu eingerichtet ist, für die Bestimmung der Graphenmenge durch die Graphenmengenbestimmungseinheit (120; 220; 320) eine Nachbarschaftsmenge bereitzustellen, wobei die Nachbarschaftsmenge alle Paare von Elementen der Objektmenge umfasst, so dass jedes der Paare zwei Elemente enthält, die zwei Objekte des Bildbereichs repräsentieren, die benachbart sind.

10. Vorrichtung nach Anspruch 9,
wobei die Vorrichtung ferner eine Objektsortiereinheit umfasst, wobei die Objektsortiereinheit dafür eingerichtet ist, die Elemente der Objektmenge basierend auf den x-Koordinatenwerten der Objekte des Bildbereichs zu sortieren, die von den Elementen der Objektmenge repräsentiert werden, um eine sortierte Anordnung der Elemente der Objektmenge zu erhalten, und
wobei die Nachbarschaftsbestimmungseinheit (110; 210; 310) dafür eingerichtet ist, die Nachbarschaftsmenge basierend auf der sortierten Anordnung der Elemente der Objektmenge zu bestimmen.

11. Vorrichtung nach Anspruch 10, wobei die Nachbarschaftsbestimmungseinheit (110; 210; 310) dafür eingerichtet ist, die Nachbarschaftsmenge so zu bestimmen, dass für ein betrachtetes Element aus der sortierten Anordnung der Elemente der Objektmenge, in einer von der sortierten Anordnung vorgegebenen Reihenfolge beginnend mit dem direkten Nachfolger des betrachteten Elements, jeweils einer der Nachfolger des betrachteten Elements daraufhin geprüft wird, ob das betrachtete Element und der jeweiligen Nachfolger benachbart sind, bis die absolute Differenz der x-Koordinatenwerte des von dem betrachteten Element repräsentierten Objekts und des Objekts, das von dem Nachfolger repräsentiert wird, größer ist als der erste maximale x-Abstandswert.

12. Vorrichtung nach einem der Ansprüche 9 bis 11,
wobei die Vorrichtung ferner eine Clustermengenbestimmungseinheit (215; 315) aufweist, die dafür eingerichtet ist, basierend auf der Nachbarschaftsmenge eine oder mehrere Clustermengen zu bestimmen, so dass jedes der Paare der Nachbarschaftsmenge in genau einer der Clustermengen enthalten ist, wobei kein Paar einer der Clustermengen ein Element enthält, dass zu einem Element eines anderen Paares einer anderen Clustermenge benachbart ist,
wobei die Graphenmengenbestimmungseinheit (120; 220; 320) dafür eingerichtet ist, die Graphenmenge basierend auf der einen oder den mehreren Clustermengen zu bestimmen.

13. Vorrichtung nach einem der Ansprüche 8 bis 12, wobei die Vorrichtung ferner eine Positionsbestimmungseinheit (305) aufweist, wobei jedes der Objekte der Objektmenge eine Ausdehnung aufweist, und wobei die Positionsbestimmungseinheit (305) dafür eingerichtet ist, für jedes Objekt den x-Koordinatenwert zu bestimmen, der dem Objekt zugewiesen ist, und den y-Koordinatenwert des Objekts zu bestimmen der dem Objekt zugewiesen ist, indem ein gewählter x-Koordinatenwert des Objekts und ein gewählter y-Koordinatenwert des Objekts festgelegt wird, wobei der gewählte x-Koordinatenwert und der gewählte y-Koordinatenwert eine Position innerhalb des Objekts oder auf einer Randlinie des Objekts bezeichnet.

14. Vorrichtung nach Anspruch 13, wobei die Positionsbestimmungseinheit (305) dafür eingerichtet ist, den ersten maximalen x-Abstandswert als Differenz einer ersten Ausdehnung eines der Aufnahmebereiche in x-Richtung und einer ersten vordefinierten maximalen Objektausdehnung in x-Richtung zu bestimmen, und wobei die Positionsbestimmungseinheit (305) ferner dafür eingerichtet ist, den zweiten maximalen y-Abstandswert als Differenz einer Ausdehnung dieses Aufnahmebereichs in y-Richtung und einer zweiten vordefinierten maximalen Objektausdehnung in y-Richtung zu bestimmen.

15. Vorrichtung nach einem der vorherigen Ansprüche, wobei die Aufnahmebereichsbestimmungseinheit (140; 240; 340) dafür eingerichtet ist, für jeden der vollständigen Graphen der Auswahlmenge einen Mittelpunkt für den jeweils einen der Aufnahmebereiche durch Anwendung der Formel:

$$M_x \;=\; \left( Max\left( \{ x_j | \forall j \in C_i \} \right) + Min\left( \{ x_j | \forall j \in C_i \} \right) \right)/2$$

$$M_y \;=\; \left( Max\left( \{ y_j | \forall j \in C_i \} \right) + Min\left( \{ y_j | \forall j \in C_i \} \right) \right)/2$$

zu bestimmen, wobei $C_i$ eine Menge bezeichnet, die den i-ten vollständigen Graphen der Auswahlmenge repräsentiert, wobei j das j-te Element der in dem vollständigen Graphen enthaltenen Elemente bezeichnet, wobei $x_j$ den x-Koordinatenwert des Objekts darstellt, das durch das j-te Element des vollständigen Graphen repräsentiert wird, wobei $y_j$ den y-Koordinatenwert des Objekts darstellt, das durch das j-te Element des vollständigen Graphen repräsentiert wird, wobei Max ein Maximum bezeichnet und wobei Min ein Minimum bezeichnet.

16. Vorrichtung zur Einstellung einer Kameraposition, umfassend:

eine Vorrichtung (1310) zur Festlegung von einem oder mehreren Aufnahmebereichen nach einem der Ansprüche 1 bis 15, und
eine Vorrichtung (1320) zum Positionieren, wobei die Vorrichtung zum Positionieren eingerichtet ist, die Aufnahmeposition einer Kamera basierend auf einem Aufnahmebereich der von der Auswahlmengenbestimmungseinheit (130; 230; 330) bestimmten Aufnahmebereiche so einzustellen, dass dieser Aufnahmebereich vollständig von der Kamera aufgenommen werden kann.

17. Verfahren zur Festlegung von einem oder mehreren Aufnahmebereichen in einem Bildbereich, wobei der Bildbereich Objekte umfasst, so dass die Aufnahmebereiche alle Objekte des Bildbereichs abdecken, wobei eine Objektmenge dadurch definiert ist, dass jedes Element der Objektmenge jeweils eines der Objekte des Bildbereichs repräsentiert, und jedes Objekt des Bildbereichs durch jeweils ein Element der Objektmenge repräsentiert wird, wobei ein erstes und ein zweites Element der Objektmenge benachbart sind, wenn ein von dem ersten Element der Objektmenge repräsentiertes erstes Objekt des Bildbereichs zu einem von dem zweiten Element der Objektmenge repräsentierten zweiten Objekt des Bildbereichs benachbart ist, und wobei das Verfahren die Schritte umfasst:

Bestimmung, ob zwei Objekte des Bildbereichs benachbart sind,
Bestimmung einer Graphenmenge, so dass die Graphenmenge einen oder mehrere vollständige Graphen umfasst, wobei jeder der vollständigen Graphen wenigstens ein Element der Objektmenge umfasst, wobei jedes der Elemente der Objektmenge von wenigstens einem der vollständigen Graphen der Graphenmenge umfasst ist, wobei jedes Element des vollständigen Graphen zu jedem anderen Element dieses vollständigen Graphen benachbart ist, und wobei kein anderer sonstiger Graph aus den Elementen der Objektmenge gebildet werden kann, der alle Elemente eines der vollständigen Graphen der Graphenmenge und wenigstens ein weiteres Element der Objektmenge enthält, so dass jedes Element des sonstigen Graphen zu jedem anderen Element des sonstigen Graphen benachbart ist,
Bestimmung einer Auswahlmenge, wobei für wenigstens eines der Elemente der Objektmenge bestimmt wird, ob das Element von genau einem der vollständigen Graphen der Graphenmenge umfasst ist, und wobei, wenn eines der Elemente der Objektmenge von genau einem der vollständigen Graphen der Graphenmenge umfasst ist, dieser vollständige Graph der Auswahlmenge hinzugefügt wird, und
Bestimmung des einen oder der mehreren Aufnahmebereiche in dem Bildbereich, wobei für jeden der vollständigen Graphen der Auswahlmenge jeweils einer der Aufnahmebereiche in dem Bildbereich so bestimmt wird, dass jeder der Aufnahmebereiche alle Objekte des Bildbereichs abdeckt, die von den Elementen eines vollständigen Graphen repräsentiert werden.

18. Computerprogramm zur Durchführung des Verfahrens gemäß Anspruch 17, wenn das Computerprogramm auf einem Computer oder Mikroprozessor abläuft.

**Claims**

1.  A device for establishing one or several recording regions in an image region, the image region including objects such that the recording regions cover all the objects of the image region, an object set being defined by each element of the object set representing one of the objects of the image region each and each object of the image region being represented by an element of the object set each, a first and a second element of the object set being neighboring when a first object of the image region represented by the first element of the object set is neighboring to a second object of the image region represented by the second element of the object set, the device comprising:

    a neighborhood determining unit (110; 210; 310) for determining whether two objects of the image region are neighboring,

    a graph set determining unit (120; 220; 320) for determining a graph set such that the graph set includes one or several complete graphs, each of the complete graphs including at least one element of the object set, each of the elements of the object set being included by at least one of the complete graphs of the graph set, each element of the complete graphs being neighboring to every other element of this complete graph, wherein it is impossible to form from the elements of the object set any other graph containing all the elements of one of the complete graphs of the graph set and at least another element of the object set such that each element of the other graph is neighboring to every other element of the other graph,

    a selection set determining unit (130; 230; 330) for determining a selection set, the selection set determining unit (130; 230; 330) being configured to determine for at least one of the elements of the object set whether the element is included by precisely one of the complete graphs of the graph set, and wherein the selection set determining unit (130; 230; 330) is configured to add, when one of the elements of the object set is included by precisely one of the complete graphs of the graph set, this complete graph to the selection set, and

    a recording region determining unit (140; 240; 340) for determining the one or several recording regions in the image region, the recording region determining unit (140; 240; 340) being configured to determine for each of the complete graphs of the selection set, one of the recording regions in the image region each such that each of the recording regions covers all the objects of the image region which are represented by the elements of a complete graph.

2.  The device in accordance with claim 1, wherein the selection set determining unit (130; 230; 330) is configured to determine the selection set such that all the elements of the object set are contained in at least one of the complete graphs of the selection set.

3.  The device in accordance with claim 1 or 2,
    wherein the selection set determining unit (130; 230; 330) is configured to remove, when one of the elements of the object set is included by precisely one of the complete graphs of the graph set, this complete graph from the graph set, and to remove the elements of this complete graph from the object set, and
    wherein the selection set determining unit (130; 230; 330) is configured to determine whether at least one of the elements still contained in the object set is included by precisely one of the complete graphs still contained in the graph set.

4.  The device in accordance with one of the preceding claims,
    wherein the selection set determining unit (130; 230; 330) is configured to perform a threshold value test when no one of the elements contained in the object set is included by precisely one of the complete graphs contained in the graph set, and
    wherein the selection set determining unit (130; 230; 330) is configured to perform either a first selection algorithm when the result of the threshold value test is that a number of the complete graphs contained in the graph set is greater than a predetermined threshold value, or else to execute a second, different selection algorithm when the result of the threshold value test is that the number of the complete graphs contained in the graph set is smaller than or equaling the predetermined threshold value,
    wherein the selection set determining unit (130; 230; 330) is configured to add, when executing the first selection algorithm or the second selection algorithm, at least one of the complete graphs of the graph set to the selection set.

5.  The device in accordance with claim 4, wherein the selection set determining unit (130; 230; 330) is configured to select, when executing the first selection algorithm, one of the complete graphs of the graph set which comprises the greatest number of elements of all the complete graphs of the graph set.

6.  The device in accordance with claim 4 or 5, wherein the selection set determining unit (130; 230; 330) is configured, when performing the second selection algorithm, to determine from the complete graphs of the graph set and add to the selection set that complete graph for which the number of the further complete graphs which must be added to the selection set in order for the selection set to include all the elements of the object set, is minimal.

7. The device in accordance with one of claims 4 to 6, wherein the selection set determining unit (130; 230; 330) is configured to use an algorithm which is based on dynamic programming as the second selection algorithm.

8. The device in accordance with one of the preceding claims,
wherein a position is associated to each of the objects of the image region, the position including an x coordinate value and a y coordinate value, and
wherein the neighborhood determining unit (110; 210; 310) is configured to determine whether two of the objects of the image region are neighboring such that two of the objects of the image region are neighboring exactly when a first absolute difference of the x coordinate values of the two objects is smaller than or equaling a first maximum x distance value, and when a second absolute difference of the y coordinate values of the two objects is smaller than or equaling a second maximum y distance value.

9. The device in accordance with claim 8, wherein the neighborhood determining unit (110; 210; 310) additionally is configured to provide a neighborhood set for determining a graph set by the graph set determining unit (120; 220; 320), the neighborhood set including all the pairs of elements of the object set such that each of the pairs contains two elements which represent two objects of the image region which are neighboring.

10. The device in accordance with claim 9,
wherein the device additionally includes an object sorting unit, the object sorting unit being configured to sort the elements of the object set based on the x coordinate values of the objects of the image region which are represented by the elements of the object set so as to acquire a sorted arrangement of the elements of the object set, and
wherein the neighborhood determining unit (110; 210; 310) is configured to determine the neighborhood set based on the sorted arrangement of the elements of the object set.

11. The device in accordance with claim 10, wherein the neighborhood determining unit (110; 210; 310) is configured to determine the neighborhood set such that, for an element considered from the sorted arrangement of the elements of the object set, in an order predetermined by the sorted arrangement, starting with the direct successor of the element considered, one of the successors of the element considered each is checked as to whether the element considered and the respective successor are neighboring until the absolute difference of the x coordinate values of the object represented by the element considered and the object represented by the successor is greater than the first maximum x distance value.

12. The device in accordance with one of claims 9 to 11,
wherein the device additionally comprises a cluster set determining unit (215; 315) configured to determine one or several cluster sets based on the neighborhood set such that each of the pairs of the neighborhood sets is contained in precisely one of the cluster sets, no pair of one of the cluster sets containing an element which is neighboring to an element of another pair of another cluster set,
wherein the graph set determining unit (120; 220; 320) is configured to determine the graph set based on the one or several cluster sets.

13. The device in accordance with one of claims 8 to 12, wherein the device additionally comprises a position determining unit (305), each of the objects of the object set comprising an extension, and the position determining unit (305) being configured to determine for each object the x coordinate value associated to the object and the y coordinate value of the object associated to the object by establishing a selected x coordinate value of the object and a selected y coordinate value of the object, the selected x coordinate value and the selected y coordinate value identifying a position within the object or on a borderline of the object.

14. The device in accordance with claim 13, wherein the position determining unit (305) is configured to determine the first maximum x distance value as a difference of a first extension of one of the recording regions in the x direction and a first predefined maximum object extension in the x direction, and the position determining unit (305) being further configured to determine the second maximum y distance value as a difference of an extension of this recording region in the y direction and a second predefined maximum object extension in the y direction.

15. The device in accordance with one of the preceding claims, wherein the recording region determining unit (140;

240; 340) is configured to determine, for each of the complete graphs of the selection set, a center for the respective one of the recording regions by applying the following formula:

$$M_x = \left( Max\left(\{x_j | \forall j \in C_i\}\right) + Min\left(\{x_j | \forall j \in C_i\}\right) \right)/2$$

$$M_y = \left( Max\left(\{y_j | \forall j \in C_i\}\right) + Min\left(\{y_j | \forall j \in C_i\}\right) \right)/2$$

$C_i$ identifying a set identifying the i-th complete graph of the selection set, j representing the j-th element of the elements contained in the complete graph, $x_j$ representing the x coordinate value of the object represented by the j-th element of the complete graph, $y_j$ representing the y coordinate value of the object represented by the j-th element of the complete graph, Max identifying a maximum, and Min identifying a minimum.

16. A device for setting a camera position, comprising:

a device (1310) for establishing one or several recording regions in accordance with one of claims 1 to 15, and a device (1320) for positioning, the device for positioning being configured to set the recording position of a camera based on a recording region of the recording regions determined by the selection set determining unit (130; 230; 330) such that this recording region can be recorded completely by the camera.

17. A method for establishing one or several recording regions in an image region, the image region including objects such that the recording regions cover all the objects of the image region, an object set being defined by each element of the object set representing one of the objects of the image region each and each object of the image region being represented by an element of the object set each, a first and a second element of the object set being neighboring when a first object of the image region represented by the first element of the object set is neighboring to a second object of the image region represented by the second element of the object set, the method comprising the steps of:

determining whether two objects of the image region are neighboring, determining a graph set such that the graph set includes one or several complete graphs, each of the complete graphs including at least one element of the object set, each of the elements of the object set being included by at least one of the complete graphs of the graph set, each element of the complete graph being neighboring to every other element of this complete graph, wherein it is impossible to form from the elements of the object set any other graph which contains all the elements of one of the complete graphs of the graph set and at least another element of the object set such that each element of the other graph is neighboring to every other element of the other graph, determining a selection set, wherein it is determined for at least one of the elements of the object set whether the element is included by precisely one of the complete graphs of the graph set, and wherein, when one of the elements of the object set is included by precisely one of the complete graphs of the graph set, this complete graph is added to the selection set, and determining the one or several recording regions in the image region, wherein one of the recording regions in the image region each is determined for each of the complete graphs of the graph set such that each of the recording regions covers all the objects of the image region represented by the elements of a complete graph.

18. A computer program for performing the method in accordance with claim 17 when the computer program runs on a computer or microprocessor.

**Revendications**

1. Dispositif permettant de spécifier une ou plusieurs zones de capture dans une zone d'image, dans lequel la zone d'image comporte des objets, de sorte que les zones de capture couvrent tous les objets de la zone d'image, dans lequel une quantité d'objets est définie par le fait que chaque élément de la quantité d'objets représente respectivement l'un des objets de la zone d'image et que chaque objet de la zone d'image est respectivement représenté par un élément de la quantité d'objets, dans lequel un premier et un deuxième élément de la quantité d'objets sont adjacents lorsqu'un premier objet de la zone d'image représenté par le premier élément de la quantité d'objets est adjacent à un deuxième objet de la zone d'image représenté par le deuxième élément de la quantité d'objets, et dans lequel le dispositif comprend:

une unité de détermination de voisinage (110; 210; 310) destinée à déterminer si deux objets de la zone d'image sont adjacents,

une unité de détermination de quantité de graphiques (120; 220; 320) destinée à déterminer une quantité de graphiques de sorte que la quantité de graphiques comporte un ou plusieurs graphiques complets, où chacun des graphiques complets comporte au moins un élément de la quantité d'objets, où chacun des éléments de la quantité d'objets est compris dans au moins l'un des graphiques complets de la quantité de graphiques, où chaque élément du graphique complet est adjacent à chaque autre élément de ce graphique complet, et où aucun autre graphique ne peut être formé, à partir des éléments de la quantité d'objets, qui contient tous les éléments de l'un des graphiques complets de la quantité de graphiques et au moins un autre élément de la quantité d'objets, de sorte que chaque élément de l'autre graphique soit adjacent à chaque autre élément de l'autre graphique,

une unité de détermination de quantité de sélection (130; 230; 330) destinée à déterminer une quantité de sélection, où l'unité de détermination de quantité de sélection (130; 230; 330) est conçue pour déterminer, pour au moins l'un des éléments de la quantité d'objets, si l'élément est compris dans exactement un des graphiques complets de la quantité de graphiques, et où l'unité de détermination de quantité de sélection (130; 230; 330) est conçue pour ajouter, si l'un des éléments de la quantité d'objets est compris dans exactement un des graphiques complets de la quantité de graphiques, ce graphique complet à la quantité de sélection, et

une unité de détermination de zone de capture (140; 240; 340) destinée à déterminer l'une ou les plusieurs zones de capture dans la zone d'image, où l'unité de détermination de zone de capture (140; 240; 340) est conçue pour déterminer, pour chacun des graphiques complets de la quantité de sélection, l'une respective des zones de capture dans la zone d'image de sorte que chacune des zones de capture couvre tous les objets de la zone d'image qui sont représentées par les éléments d'un graphique complet.

2. Dispositif selon la revendication 1, dans lequel l'unité de détermination de quantité de sélection (130; 230; 330) est conçue pour déterminer la quantité de sélection de sorte que tous les éléments de la quantité d'objets soient contenus dans au moins l'un des graphiques complets de la quantité de sélection.

3. Dispositif selon la revendication 1 ou 2,

dans lequel l'unité de détermination de quantité de sélection (130; 230; 330) est conçue, si l'un des éléments de la quantité d'objets est compris dans exactement un des graphiques complets de la quantité de graphiques, pour éliminer ce graphique complet de la quantité de graphiques, et pour éliminer les éléments de ce graphique complet de la quantité d'objets, et

dans lequel l'unité de détermination de quantité de sélection (130; 230; 330) est conçue pour déterminer si au moins l'un des éléments qui sont encore contenus dans la quantité d'objets est compris dans exactement un des graphiques complets qui sont encore contenus dans la quantité de graphiques.

4. Dispositif selon l'une des revendications précédentes,

dans lequel l'unité de détermination de quantité de sélection (130; 230; 330) est conçue, si aucun des éléments qui sont contenus dans la quantité d'objets est compris dans exactement un des graphiques complets qui sont contenus dans la quantité de graphiques, pour effectuer un test de valeur de seuil, et

dans lequel l'unité de détermination de quantité de sélection (130; 230; 330) est conçue soit pour réaliser un premier algorithme de sélection lorsque le test de valeur de seuil indique qu'un nombre de graphiques complets qui sont contenus dans la quantité de graphiques est supérieur à une valeur de seuil prédéterminée, soit pour réaliser un deuxième autre algorithme de sélection lorsque le test de valeur de seuil indique que le nombre de graphiques complets contenus dans la quantité de graphiques est inférieur ou égal à la valeur de seuil prédéterminée,

dans lequel l'unité de détermination de quantité de sélection (130; 230; 330) est conçue pour ajouter, lors de la réalisation du premier algorithme de sélection ou du deuxième algorithme de sélection, au moins l'un des graphiques complets de la quantité du graphiques à la quantité de sélection.

5. Dispositif selon la revendication 4, dans lequel l'unité de détermination de quantité de sélection (130; 230; 330) est conçue pour sélectionner, lors de la réalisation du premier algorithme de sélection, l'un des graphiques complets de la quantité de graphiques qui présente le plus grand nombre d'éléments parmi tous les graphiques complets de la quantité de graphiques.

6. Dispositif selon la revendication 4 ou 5, dans lequel l'unité de détermination de quantité de sélection (130; 230; 330) est conçue pour déterminer, lors de la réalisation du deuxième algorithme de sélection, parmi les graphiques complets de la quantité de graphiques, les graphiques complets, et les ajouter à la quantité de sélection, pour lesquels le nombre des autres graphiques complets qui doivent être ajoutés à la quantité de sélection pour que la quantité de sélection comporte tous les éléments de la quantité d'objets est minimal.

7. Dispositif selon l'une des revendications 4 à 6, dans lequel l'unité de détermination de la quantité de sélection (130; 230; 330) est conçue pour utiliser, comme deuxième algorithme de sélection, un algorithme basé sur la Programmation Dynamique.

8. Dispositif selon l'une des revendications précédentes,
dans lequel à chacun des objets de la zone d'image est attribuée une position, où la position comporte une valeur de coordonnée x et une valeur de coordonnée y, et
dans lequel l'unité de détermination de voisinage (110; 210; 310) est conçue pour déterminer si deux des objets de la zone d'image sont adjacents, de sorte que deux des objets de la zone d'image soient adjacents lorsqu'une première différence absolue entre les valeurs de coordonnée x des deux objets est inférieure ou égale à une première valeur de distance maximale x et qu'une deuxième différence absolue entre les valeurs de coordonnée y des deux objets est inférieure ou égale à une deuxième valeur de distance y maximale.

9. Dispositif selon la revendication 8, dans lequel l'unité de détermination de voisinage (110; 210; 310) est par ailleurs conçue pour fournir, pour la détermination de la quantité de graphiques par l'unité de détermination de quantité de graphiques (120; 220; 320), une quantité de voisinage, où la quantité de voisinage comporte toutes les paires d'éléments de la quantité d'objets, de sorte que chacune des paires contienne deux éléments qui représentent deux objets de la zone d'image qui sont adjacents.

10. Dispositif selon la revendication 9,
dans lequel le dispositif comporte par ailleurs une unité de tri d'objets, dans lequel l'unité de tri d'objet est conçue pour trier les éléments de la quantité d'objets sur base des valeurs de coordonnée x des objets de la zone d'image qui sont représentés par les éléments de la quantité d'objets, pour obtenir une disposition triée des éléments de la quantité d'objets, et
dans lequel l'unité de détermination de voisinage (110; 210; 310) est conçue pour déterminer la quantité de voisinage sur base de la disposition triée des éléments de la quantité d'objets.

11. Dispositif selon la revendication 10, dans lequel l'unité de détermination de voisinage (110; 210; 310) est conçue pour déterminer la quantité de voisinage de sorte que pour un élément considéré de la disposition triée des éléments de la quantité d'objets est vérifié, dans un ordre prédéterminé par la disposition triée, en commençant par le successeur direct de l'élément considéré, l'un respectif des successeurs de l'élément considéré pour savoir si l'élément considéré et le successeur respectif sont adjacents, jusqu'à la différence absolue entre les valeurs de coordonnée x de l'objet représenté par l'élément considéré et de l'objet qui est représenté par le successeur soit supérieure à la première valeur de distance x maximale.

12. Dispositif selon l'une des revendications 9 à 11,
dans lequel le dispositif présente par ailleurs une unité de détermination de quantité de groupe (215; 315) conçue pour déterminer, sur base de la quantité de voisinage, une ou plusieurs quantités de groupe, de sorte que chacune des paires de la quantité de voisinage soit contenue dans exactement une des quantités de groupe, où aucune paire de l'une des quantités de groupe ne contient un élément adjacent à un élément d'une autre paire d'une autre quantité de groupe,
dans lequel l'unité de détermination de quantité de graphiques (120; 220; 320) est conçue pour déterminer la quantité de graphiques sur base de l'une ou des plusieurs quantités de groupe.

13. Dispositif selon l'une des revendications 8 à 12, dans lequel le dispositif présente par ailleurs une unité de détermination de position (305), dans lequel chacun des objets de la quantité d'objets présente une étendue, et dans lequel l'unité de détermination de position (305) est conçue pour déterminer, pour chaque objet, la valeur de coordonnée x qui est attribuée à l'objet, et pour déterminer la valeur de coordonnée y de l'objet qui est attribuée à l'objet en spécifiant une valeur de coordonnée x sélectionnée de l'objet et une valeur de coordonnée y sélectionnée de l'objet, dans lequel la valeur de coordonnée x sélectionnée et la valeur de coordonnée y sélectionnée désignent une position dans l'objet ou sur une ligne de bord de l'objet.

14. Dispositif selon la revendication 13, dans lequel l'unité de détermination de position (305) est conçue pour déterminer la première valeur de distance x maximale comme différence entre une première étendue de l'une des zones de capture dans la direction x et une première étendue d'objet maximale prédéfinie dans la direction x, et dans lequel l'unité de détermination de position (305) est par ailleurs conçue pour déterminer la deuxième valeur de distance y maximale comme différence entre une étendue de cette zone de capture dans la direction y et une deuxième étendue d'objet maximale prédéfinie dans la direction y.

15. Dispositif selon l'une des revendications précédentes, dans lequel l'unité de détermination de zone de capture (140; 240; 340) est conçue pour déterminer, pour chacun des graphiques complets de la quantité de sélection, un centre pour l'une respective des zones de capture en appliquant la formule:

$$M_x = \left( Max\left(\{x_j | \forall j \in C_i\}\right) + Min\left(\{x_j | \forall j \in C_i\}\right) \right) / 2$$

$$M_y = \left( Max\left(\{y_j | \forall j \in C_i\}\right) + Min\left(\{y_j | \forall j \in C_i\}\right) \right) / 2$$

où $C_i$ désigne une quantité qui représente l'i-ième graphique complet de la quantité de sélection, où j désigne le j-ième élément parmi les éléments contenus dans le graphique complet, où $x_j$, représente la valeur de coordonnée x de l'objet qui est représenté par le j-ième élément du graphique complet, où $y_j$ représente la valeur de coordonnée y de l'objet qui est représenté par le j-ième élément du graphique complet, où Max désigne un maximum et où Min désigne un minimum.

16. Dispositif de réglage d'une position de caméra, comportant:

un dispositif (1310) destiné à spécifier une ou plusieurs zones de capture selon l'une des revendications 1 à 15, et un dispositif (1320) de positionnement, où le dispositif de positionnement est conçu pour régler la position de capture d'une caméra sur base d'une zone de capture parmi les zones de capture déterminées par l'unité de détermination de quantité de sélection (130; 330; 230) de sorte que cette zone de capture puisse être entièrement capturée par la caméra.

17. Procédé permettant de spécifier une ou plusieurs zones de capture dans une zone d'image, dans lequel la zone d'image comporte des objets, de sorte que les zones de capture couvrent tous les objets de la zone d'image, dans lequel un quantité d'objets est définie par le fait que chaque élément de la quantité d'objets représente l'un respectif des objets de la zone d'image, et chaque objet de la zone d'image est représenté par un élément respectif de la quantité d'objets, dans lequel un premier et un deuxième élément de la quantité d'objets sont adjacents lorsqu'un premier objet de la zone d'image représenté par le premier élément de la quantité d'objets est adjacent à un deuxième objet de la zone d'image représenté par le deuxième élément de la quantité d'objets, et dans lequel le procédé comporte les étapes consistant à:

déterminer si deux objets de la zone d'image sont adjacents,
déterminer une quantité de graphiques de sorte que la quantité de graphiques comporte un ou plusieurs graphiques complets, où chacun des graphiques complets comporte au moins un élément de la quantité d'objets, où chacun des éléments de la quantité d'objets est compris dans au moins l'un des graphiques complets de la quantité de graphiques, où chaque élément du graphique complet est adjacent à chaque autre élément de ce graphique complet, et où aucun autre graphique ne peut être formé, à partir des éléments de la quantité d'objets, qui contient tous les éléments de l'un des graphiques complets de la quantité de graphiques et au moins un autre élément de la quantité d'objets, de sorte que chaque élément de l'autre graphique soit adjacent à chaque autre élément de l'autre graphique,
déterminer une quantité de sélection, où il est déterminé, pour au moins l'un des éléments de la quantité d'objets, si l'élément est compris dans exactement un des graphiques complets de la quantité de graphiques, et où, lorsqu'un des éléments de la quantité d'objets est compris dans exactement un des graphiques complets de la quantité de graphiques, ce graphique complet est ajouté à la quantité de sélection, et
déterminer l'une ou les plusieurs zones de capture dans la zone d'image, où, pour chacun des graphiques complets de la quantité de sélection, l'une respective des zones de capture dans la zone d'image est déterminée de sorte que chacune des zones de capture couvre tous les objets de la zone d'image qui sont représentés par les éléments d'un graphique complet.

**18.** Programme d'ordinateur pour la mise en oeuvre du procédé selon la revendication 17 lorsque le programme d'ordinateur est exécuté sur un ordinateur ou un microprocesseur.

EP 2 642 749 B1

Objekte im Bildbereich → **110** Nachbarschafts-bestimmungseinheit → Nachbarschafts-menge → **120** Graphenmengen-bestimmungseinheit

Graphenmenge

**130** Auswahlmengen-bestimmungseinheit → Auswahl-menge → **140** Aufnahmebereichs-bestimmungseinheit → Aufnahme-bereiche

FIGUR 1

Clustermengenbestimmungseinheit

215

Graphenmengenbestimmungseinheit

220

Nachbarschaftsmenge

Nachbarschaftsbestimmungseinheit

210

Objekte im
Bildbereich

Graphenmenge

Aufnahmebereiche

Aufnahmebereichsbestimmungseinheit

240

Auswahlmenge

Auswahlmengenbestimmungseinheit

230

FIGUR 2

Clustermengenbestimmungseinheit — 315

Positionsbestimmungseinheit — 305  310

320

Objekte  Objektpositionen → Nachbarschaftsbestimmungseinheit

Graphenmengenbestimmungseinheit

Graphenmenge

Auswahlmengenbestimmungseinheit  Auswahlmenge → Aufnahmebereichsbestimmungseinheit  Aufnahmebereiche

330  340

FIGUR 3

FIGUR 4

FIGUR 5

EP 2 642 749 B1

FIGUR 6B

FIGUR 6A

FIGUR 7A

FIGUR 7B

FIGUR 7C

EP 2 642 749 B1

FIGUR 8A

FIGUR 8B

EP 2 642 749 B1

EP 2 642 749 B1

```
                                                    920                              950                         970
                                              ┌─────────┐                    ┌──────────────┐           ┌──────────────┐
                                             ╱ Punkt     ╲      nein         ╱ Anzahl der     ╲   nein   │ Dynamische-  │
                                            ╱ vorhanden?  ╲────────────────╱ Restteilmengen   ╲─────────▶│Programmierung│
                                            ╲             ╱                 ╲ größer als Schwell╱         └──────────────┘
                                             ╲           ╱                   ╲     wert?       ╱
  ┌─────────┐                                 └────┬────┘                     └──────┬───────┘
  │  Start  │                                      │ ja                              │ ja
  └────┬────┘                                      ▼                                 ▼
       │                                  ┌──────────────────┐            ┌──────────────────┐
       ▼                                  │ Markiere alle    │            │   Heuristik:     │
┌────────────────┐                        │ Punkte der       │            │ Wähle Teilmenge  │
│ Ermittle nicht │                        │ gefundenen Teil- │◀───────────│ mit der größten  │
│ markierten     │                        │ menge als abge-  │            │ Anzahl an nicht  │
│ Punkt, der nur │                        │ deckt und füge   │            │ markierten       │
│ in einer       │                        │ die Teilmenge der│            │ Punkten          │
│ einzigen Teil- │                        │ Lösungsmenge hinzu│           └──────────────────┘
│ menge vorkommt │                        └─────────┬────────┘
└────────────────┘                                  │
       910          940                              ▼
                                           ┌──────────────────┐
                    ja                     ╱ Sind noch nicht    ╲   nein    ┌─────────┐
                ◀──────────────────────── ╱  markierte Punkte   ╲─────────▶│  Ende   │
                                          ╲   vorhanden?        ╱          └─────────┘
                                           ╲                   ╱
                                            └─────────────────┘
                                                  930
```

Ermittle nicht markierten Punkt, der nur in einer einzigen Teilmenge vorkommt

Punkt vorhanden?

Anzahl der Restteilmengen größer als Schwellwert?

Dynamische-Programmierung

Markiere alle Punkte der gefundenen Teilmenge als abgedeckt und füge die Teilmenge der Lösungsmenge hinzu

Heuristik: Wähle Teilmenge mit der größten Anzahl an nicht markierten Punkten

Sind noch nicht markierte Punkte vorhanden?

Start

Ende

FIGUR 9

FIGUR 10A

FIGUR 10B

EP 2 642 749 B1

FIGUR 11A

FIGUR 11B

FIGUR 12

FIGUR 13

EP 2 642 749 B1

**EP 2 642 749 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BELLMAN, R.** Dynamic programming. Princeton University Press, 1957
- **BROTCORNE, L. ; G. LAPORTE ; F. SEMET.** Fast heuristics for large scale covering-location problems. *Comput. Oper. Res.,* Mai 2002, vol. 29, 651-665
- **COOK, S. A.** The complexity of theorem-proving procedures. *Proceedings of the third annual ACM symposium on Theory of computing, STOC '71,* 1971, 151-158
- **FAN, G. ; F. LIANG ; S. JIN.** An Efficient Approach for Point Coverage Problem of Sensor Network. *Proceedings of the 2008 International Symposium on Electronic Commerce and Security, ISECS '08,* 2008, 124-128
- **HOCHBAUM, D. S. ; W. MAASS.** Approximation schemes for covering and packingproblems in image processing and VLSI. *J. ACM,* 1985, vol. 32, 130-136
- Reducibility Among Combinatorial Problems. **KARP, R. M.** Complexity ofComputer Computations. Plenum Press, 1972, 85-103
- **PORSCHEN, S.** Algorithms for Rectangular Covering Problems. *ICCSA,* 2006, vol. 1, 40-49
- **PORSCHEN, S.** On Problems With Closure Properties. *IMECS,* 2011, vol. 1, 258-262